(19) Europäisches Patentamt
European Patent Office
Office européen des brevets

(11) EP 4 738 519 A1

(12) EUROPEAN PATENT APPLICATION
published in accordance with Art. 153(4) EPC

(43) Date of publication:
**06.05.2026 Bulletin 2026/19**

(21) Application number: **24849102.9**

(22) Date of filing: **26.07.2024**

(51) International Patent Classification (IPC):
***H01M 10/0567*** (2010.01) ***H01M 10/052*** (2010.01)
***H01M 10/054*** (2010.01) ***H01M 10/0568*** (2010.01)
***H01M 10/0569*** (2010.01)

(52) Cooperative Patent Classification (CPC):
**H01M 10/052; H01M 10/054; H01M 10/0567; H01M 10/0568; H01M 10/0569;** Y02E 60/10

(86) International application number:
**PCT/JP2024/026844**

(87) International publication number:
**WO 2025/028450 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 JP 2023123780**

(71) Applicant: **Central Glass Company, Limited**
**Ube-shi, Yamaguchi 755-0001 (JP)**

(72) Inventors:
- **ESAKI, Ryota**
**Tokyo 101-0054 (JP)**
- **TERADA, Ryosuke**
**Tokyo 101-0054 (JP)**
- **TOKOMOTO, Junichi**
**Tokyo 101-0054 (JP)**
- **KAWABATA, Wataru**
**Tokyo 101-0054 (JP)**
- **TAKAHASHI, Mikihiro**
**Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

# (54) NONAQUEOUS ELECTROLYTE SOLUTION AND NONAQUEOUS ELECTROLYTE BATTERY

(57) A nonaqueous electrolyte solution containing (I) a compound represented by the general formula (1) described in the specification, (II) at least one compound selected from the group consisting of the compounds (2) to (5) described in the specification, (III) a solute, and (IV) a nonaqueous organic solvent, and a nonaqueous electrolyte solution battery containing the nonaqueous electrolyte solution.

EP 4 738 519 A1

## Description

### TECHNICAL FIELD

The present disclosure relates to a nonaqueous electrolyte solution and a nonaqueous electrolyte solution battery.

### BACKGROUND ART

In recent years, there is a rapidly increasing demand for batteries that have a high capacity, high output, and a high energy density and that can be mounted as an auxiliary power source for electric vehicles, hybrid vehicles, and fuel-cell vehicles in addition to a power storage system for a compact and high energy density application, such as information-related devices and communication devices, that is, personal computers, video cameras, digital cameras, mobile phones, and smartphones. In addition, there is an increasing demand for batteries that can be used for a long period of time even in power storage systems for large and power applications such as power storage. Nonaqueous electrolyte solution batteries such as lithium secondary batteries have been actively developed as candidates for these various power storage systems. A nonaqueous electrolyte solution battery generally includes a positive electrode, a negative electrode, a separator, and a nonaqueous electrolyte solution.

Patent Literature 1 proposes to improve the charge-discharge efficiency and the cycle characteristic using a sulfonic anhydride in an electrolyte solution.

Patent Literature 2 proposes to improve the cycle characteristic and the low-temperature characteristic using a silicon compound in an electrolyte solution.

Patent Literature 3 proposes to improve the storage characteristic using a nonaqueous electrolyte solution containing lithium bis(fluorosulfonyl)imide as a solute.

Patent Literature 4 proposes to suppress self-discharge and improve the storage characteristic after charging using lithium monofluorophosphate or lithium difluorophosphate in an electrolyte solution.

Patent Literature 5 proposes to maintain a high input/output characteristic and an impedance characteristic even after a durability test using a nonaqueous electrolyte solution containing a fluorosulfonic acid salt.

Patent Literature 6 proposes to suppress the decomposition on the carbon negative electrode due to the progress of the charge and discharge cycle using a nonaqueous electrolyte solution containing a cyclic sulfate ester.

### CITATION LIST

### PATENT LITERATURE

Patent Literature 1: JP4379567B
Patent Literature 2: JP3497812B
Patent Literature 3: JP4847675B
Patent Literature 4: JP3439085B
Patent Literature 5: JP5353923B
Patent Literature 6: JP3760540B

### SUMMARY OF INVENTION

### TECHNICAL PROBLEM

As described above, Patent Literature 1 proposes to improve the charge-discharge efficiency and the cycle characteristic of a secondary battery using an electrolyte solution containing a sulfonic anhydride. However, the studies by the present disclosers have revealed that the secondary battery described in Patent Literature 1 has a problem of high initial resistance.

The present disclosure has been made in view of the above circumstances, and an object thereof is to provide a nonaqueous electrolyte solution capable of lowering the initial resistance of a nonaqueous electrolyte solution battery and a nonaqueous electrolyte solution battery having low initial resistance.

SOLUTION TO PROBLEM

As a result of intensive studies to solve such a problem, the present disclosers have found that a nonaqueous electrolyte solution battery having low initial resistance can be provided when a specific sulfonic anhydride and a specific compound are contained in a nonaqueous electrolyte solution containing a nonaqueous organic solvent and a solute. Specifically, the above problem can be solved by the following configuration.

[1] A nonaqueous electrolyte solution containing:

(I) a compound represented by the following general formula (1);
(II) at least one compound selected from the group consisting of the following compounds (2) to (5);
(III) a solute; and
(IV) a nonaqueous organic solvent.

[Chem. 1]

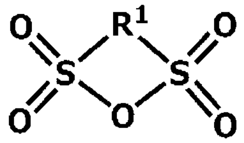

(1)

In the general formula (1), $R^1$ represents an alkylene group having 1 to 6 carbon atoms. An oxygen atom may be included in a carbon atom-carbon atom bond in the alkylene group. Any hydrogen atom of the alkylene group may be substituted with a halogen atom.

A compound (2): at least one compound selected from the group consisting of a compound represented by the following general formula (2-A), a compound represented by the following general formula (2-B), and a compound represented by the following general formula (2-C).

[Chem. 2]

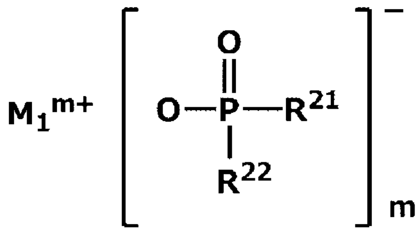

(2-A)

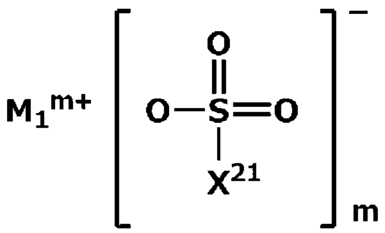

(2-B)

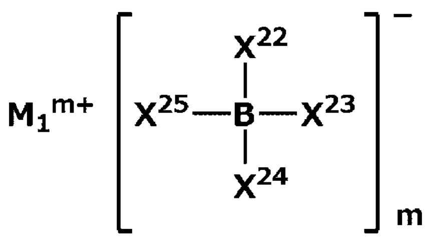

(2-C)

In the general formula (2-A), $R^{21}$ and $R^{22}$ each independently represent a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. $M_1^{m+}$ is a proton, a metal cation, or an onium cation. m represents a valence of the corresponding cation. Here, the compound represented by the general formula (2-A) contains at least one P-F bond.

In the general formula (2-B), $X^{21}$ represents a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. Here, the organic group contains at least one fluorine atom. $M_1^{m+}$ is a proton, a metal cation, or an onium cation. m represents a valence of the corresponding cation.

In the general formula (2-C), $X^{22}$ to $X^{25}$ each independently represent a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. Here, the organic group contains at least one fluorine atom. $M_1^{m+}$ is a proton, a metal cation, or an onium cation. m represents a valence of the corresponding cation. Here, the compound represented by the general formula (2-C) contains at least one B-F bond.

A compound (3): a compound represented by the following general formula (3).

[Chem. 3]

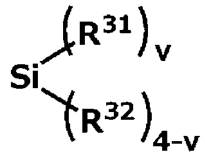

(3)

In the general formula (3), each $R^{31}$ represents a group having a carbon-carbon unsaturated bond. The plurality of $R^{31}$'s may be the same as or different from each other. Each $R^{32}$ represents a fluorine atom or an alkyl group having 1 to 10 carbon atoms, and the alkyl group may have at least one of a fluorine atom or an oxygen atom. When there are a plurality of $R^{32}$'s, the plurality of $R^{32}$'s may be the same as or different from each other. v represents an integer of 2 to 4.

A compound (4): a compound represented by the following general formula (4).

[Chem. 4]

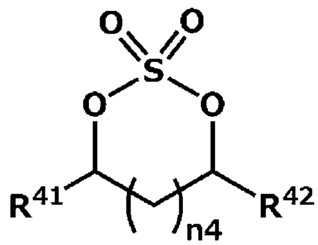

(4)

In the general formula (4), $R^{41}$ and $R^{42}$ each independently represent a hydrogen atom, an alkyl group having 1 or 2 carbon atoms, an alkenyl group having 2 to 5 carbon atoms, or an aryl group having 6 to 10 carbon atoms. Any hydrogen atom of the alkenyl group and the aryl group may be substituted with a halogen atom. n4 is 0 or 1.

A compound (5): a compound represented by the following general formula (5).

[Chem. 5]

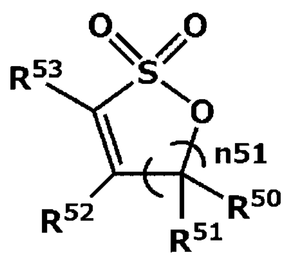

(5)

In the general formula (5), $R^{50}$ to $R^{53}$ each independently represent a hydrogen atom, a fluorine atom, an alkyl group having 1 to 5 carbon atoms, or a fluoroalkyl group having 1 to 4 carbon atoms. n51 represents an integer of 1 to 3.

[2] The nonaqueous electrolyte solution according to [1], in which a content of the (I) with respect to the total amount of the nonaqueous electrolyte solution is 0.01% by mass or more and 10% by mass or less.

[3] The nonaqueous electrolyte solution according to [1] or [2], in which a content of the (11) with respect to the total amount of the nonaqueous electrolyte solution is 0.01% by mass or more and 10% by mass or less.

[4] The nonaqueous electrolyte solution according to any one of [1] to [3], in which the compound represented by the general formula (1) is at least one compound selected from the group consisting of 1,2-ethanedisulfonic anhydride and 1,3-propanedisulfonic anhydride.

[5] The nonaqueous electrolyte solution according to any one of [1] to [4], in which the compound (2) is at least one compound selected from the group consisting of lithium difluorophosphate, lithium fluorosulfonate, lithium trifluoromethanesulfonate, and lithium tetrafluoroborate.

[6] The nonaqueous electrolyte solution according to any one of [1] to [5], in which the compound (3) is at least one compound selected from the group consisting of trivinylmethylsilane, trivinylfluorosilane, and tetravinylsilane.

[7] The nonaqueous electrolyte solution according to any one of [1] to [6], in which the compound (4) is at least one compound selected from the group consisting of 1,3,2-dioxathiolane-2,2-dioxide and 1,3,2-dioxathiane-2,2-dioxide.

[8] The nonaqueous electrolyte solution according to any one of [1] to [7], in which the (III) is: at least one selected from the group consisting of $LiPF_6$, $LiSbF_6$, $LiAsF_6$, $LiClO_4$, $LiN(CF_3SO_2)_2$, $LiN(FSO_2)_2$, $LiN(POF_2)_2$, $LiCF_3SO_3$, $LiC_4F_9SO_3$, $LiAlO_2$, $LiAlCl_4$, LiCl, and LiI; or at least one selected from the group consisting of $NaPF_6$, $NaSbF_6$, $NaAsF_6$, $NaClO_4$, $NaN(CF_3SO_2)_2$, $NaN(FSO_2)_2$, $NaN(POF_2)_2$, $NaCF_3SO_3$, $NaC_4F_9SO_3$, $NaAlO_2$, $NaAlCl_4$, NaCl, and NaI.

[9] The nonaqueous electrolyte solution according to any one of [1] to [8], in which the (IV) contains at least one selected from the group consisting of a cyclic ester, a chain ester, a cyclic ether, a chain ether, a sulfone compound, a sulfoxide compound, and an ionic liquid.

[10] The nonaqueous electrolyte solution according to [9], in which the cyclic ester is a cyclic carbonate.

[11] The nonaqueous electrolyte solution according to [10], in which the cyclic carbonate is at least one selected from the group consisting of ethylene carbonate, propylene carbonate, and fluoroethylene carbonate.

[12] The nonaqueous electrolyte solution according to [9], in which the chain ester is a chain carbonate.

[13] The nonaqueous electrolyte solution according to [12], in which the chain carbonate is at least one selected from the group consisting of ethyl methyl carbonate, dimethyl carbonate, diethyl carbonate, and methyl propyl carbonate.

[14] A nonaqueous electrolyte solution battery, at least having: a positive electrode; a negative electrode; a separator; and the nonaqueous electrolyte solution according to any one of [1] to [13].

ADVANTAGEOUS EFFECTS OF INVENTION

According to the present disclosure, a nonaqueous electrolyte solution capable of lowering the initial resistance of a nonaqueous electrolyte solution battery and a nonaqueous electrolyte solution battery having low initial resistance can be provided.

DESCRIPTION OF EMBODIMENTS

The term "to" in the present specification is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

1. Nonaqueous Electrolyte Solution

The nonaqueous electrolyte solution of the present disclosure is a nonaqueous electrolyte solution containing:

(I) a compound represented by the following general formula (1);
(II) at least one compound selected from the group consisting of the following compounds (2) to (5);
(III) a solute; and
(IV) a nonaqueous organic solvent.

[Chem. 6]

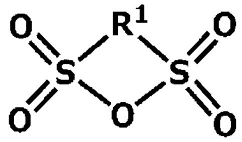

(1)

In the general formula (1), $R^1$ represents an alkylene group having 1 to 6 carbon atoms. An oxygen atom may be included in a carbon atom-carbon atom bond in the alkylene group. Any hydrogen atom of the alkylene group may be

substituted with a halogen atom.

A compound (2): at least one compound selected from the group consisting of a compound represented by the following general formula (2-A), a compound represented by the following general formula (2-B), and a compound represented by the following general formula (2-C).

[Chem. 7]

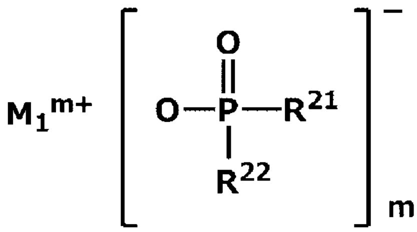

(2-A)

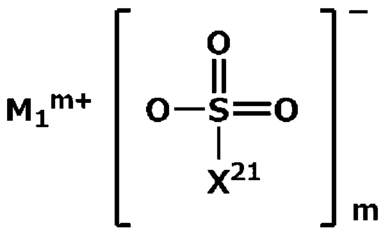

(2-B)

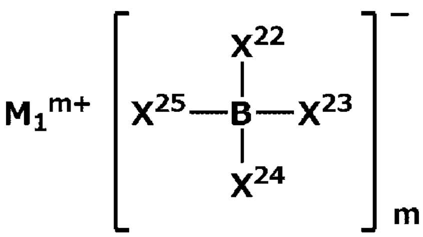

(2-C)

In the general formula (2-A), $R^{21}$ and $R^{22}$ each independently represent a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. $M_1^{m+}$ is a proton, a metal cation, or an onium cation. m represents a valence of the corresponding cation. Here, the compound represented by the general formula (2-A) contains at least one P-F bond.

In the general formula (2-B), $X^{21}$ represents a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. Here, the organic group contains at least one fluorine atom. $M_1^{m+}$ is a proton, a metal cation, or an onium cation. m represents a valence of the corresponding cation.

In the general formula (2-C), $X^{22}$ to $X^{25}$ each independently represent a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group

having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. Here, the organic group contains at least one fluorine atom. $M_1^{m+}$ is a proton, a metal cation, or an onium cation. m represents a valence of the corresponding cation. Here, the compound represented by the general formula (2-C) contains at least one B-F bond.

A compound (3): a compound represented by the following general formula (3).

[Chem. 8]

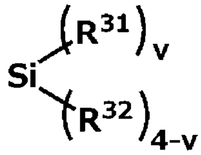

(3)

In the general formula (3), each $R^{31}$ represents a group having a carbon-carbon unsaturated bond. The plurality of $R^{31}$'s may be the same as or different from each other. Each $R^{32}$ represents a fluorine atom or an alkyl group having 1 to 10 carbon atoms, and the alkyl group may have at least one of a fluorine atom and an oxygen atom. When there are a plurality of $R^{32}$'s, the plurality of $R^{32}$'s may be the same as or different from each other. v represents an integer of 2 to 4.

A compound (4): a compound represented by the following general formula (4).

[Chem. 9]

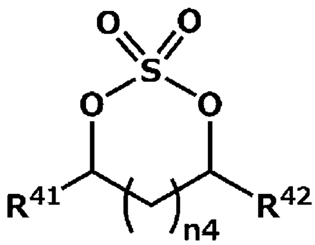

(4)

In the general formula (4), $R^{41}$ and $R^{42}$ each independently represent a hydrogen atom, an alkyl group having 1 or 2 carbon atoms, an alkenyl group having 2 to 5 carbon atoms, or an aryl group having 6 to 10 carbon atoms. Any hydrogen atom of the alkenyl group and the aryl group may be substituted with a halogen atom. n4 is 0 or 1.

A compound (5): a compound represented by the following general formula (5).

[Chem. 10]

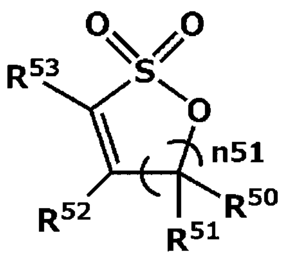

(5)

In the general formula (5), $R^{50}$ to $R^{53}$ each independently represent a hydrogen atom, a fluorine atom, an alkyl group having 1 to 5 carbon atoms, or a fluoroalkyl group having 1 to 4 carbon atoms. n51 represents an integer of 1 to 3.

(I) Compound Represented by General Formula (1)

The (I) compound represented by the general formula (1) (also referred to as "(I)") contained in the nonaqueous electrolyte solution of the present disclosure will be explained.

In the general formula (1), the alkylene group having 1 to 6 carbon atoms represented by $R^1$ may be linear or a branched chain. Examples of $R^1$ include a methylene group, an ethylene group, an n-propylene group, an isopropylene group, an n-butylene group, and an n-hexylene group.

An oxygen atom may be included in a carbon atom-carbon atom bond in the alkylene group having 1 to 6 carbon atoms represented by $R^1$. In addition, any hydrogen atom of the alkylene group having 1 to 6 carbon atoms represented by

$R^1$ may be substituted with a halogen atom (for example, a fluorine atom, a chlorine atom, a bromine atom, or an iodine atom).

$R^1$ preferably represents an alkylene group having 2 or 3 carbon atoms.

(I) is preferably at least one compound selected from the group consisting of 1,2-ethanedisulfonic anhydride and 1,3-propanedisulfonic anhydride.

In the nonaqueous electrolyte solution of the present disclosure, one type of compound may be used alone as (I), or two or more types of compounds may be mixed and used in any combination and any ratio according to the application.

The compound represented by the general formula (1) can be produced by various methods.

In the nonaqueous electrolyte solution of the present disclosure, the content of (I) with respect to the total amount of the nonaqueous electrolyte solution (also referred to as "concentration of (I)") may be 0.01% by mass or more and 10% by mass or less. The lower limit of the concentration of (I) may be 0.08% by mass or more, may be 0.3% by mass or more, or may be 0.8% by mass or more. The upper limit of the concentration of (I) may be 8% by mass or less, may be 5% by mass or less, may be 4% by mass or less, may be 3% by mass or less, or may be 1.5% by mass or less.

(II) At Least One Compound Selected from Group Consisting of Compounds (2) to (5)

The nonaqueous electrolyte solution of the present disclosure contains (II) at least one compound selected from the group consisting of compounds (2) to (5) (also referred to as "(II)") .

The compound (2) is at least one compound selected from the group consisting of a compound represented by the following general formula (2-A), a compound represented by the following general formula (2-B), and a compound represented by the following general formula (2-C).

[Chem. 11]

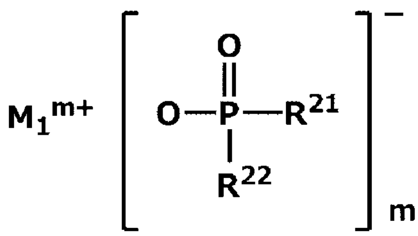

(2-A)

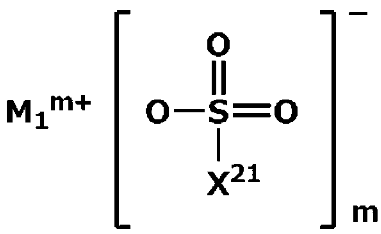

(2-B)

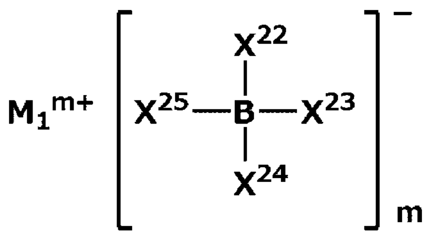

(2-C)

In the general formula (2-A), $R^{21}$ and $R^{22}$ each independently represent a fluorine atom or an organic group selected from the group consisting of an alkoxy group having 1 to 10 carbon atoms, an alkenyloxy group having 2 to 10

carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. $M_1^{m+}$ is a proton, a metal cation, or an onium cation. m represents a valence of the corresponding cation. Here, the compound represented by the general formula (2-A) contains at least one P-F bond.

In the general formula (2-B), $X^{21}$ represents a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. Here, the organic group contains at least one fluorine atom. $M_1^{m+}$ is a proton, a metal cation, or an onium cation. m represents a valence of the corresponding cation.

In the general formula (2-C), $X^{22}$ to $X^{25}$ each independently represent a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. An oxygen atom may be included in a carbon atom-carbon atom bond in the organic group. Here, the organic group contains at least one fluorine atom. $M_1^{m+}$ is a proton, a metal cation, or an onium cation. m represents a valence of the corresponding cation. Here, the compound represented by the general formula (2-C) contains at least one B-F bond.

In the general formula (2-A), $R^{21}$ and $R^{22}$ each independently represent a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Any hydrogen atom of the organic group may be substituted with a fluorine atom. $M_1^{m+}$ is a proton, a metal cation, or an onium cation. m represents a valence of the corresponding cation. Here, the compound represented by the general formula (2-A) contains at least one P-F bond.

In the general formula (2-B), $X^{21}$ represents a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Here, the organic group contains at least one fluorine atom. $M_1^{m+}$ is a proton, a metal cation, or an onium cation. m represents a valence of the corresponding cation.

In the general formula (2-C), $X^{22}$ to $X^{25}$ each independently represent a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. Here, the organic group contains at least one fluorine atom. $M_1^{m+}$ is a proton, a metal cation, or an onium cation. m represents a valence of the corresponding cation. Here, the compound represented by the general formula (2-C) contains at least one B1F bond.

In the general formula (2-A), the alkoxy group represented by $R^{21}$ and $R^{22}$ may be linear or a branched chain. Any hydrogen atom of the alkoxy group may be substituted with a fluorine atom. An oxygen atom may be included in a carbon atom-carbon atom bond in the alkoxy group. Examples of the alkoxy group include an alkoxy group and a fluorine-containing alkoxy group, each having 1 to 10 carbon atoms, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

The alkenyloxy group represented by $R^{21}$ and $R^{22}$ may be linear or a branched chain. Any hydrogen atom of the alkenyloxy group may be substituted with a fluorine atom. An oxygen atom may be included in a carbon atom-carbon atom bond in the alkenyloxy group. In addition to the carbon-carbon double bond, an unsaturated bond other than a carbon-carbon double bond may be present in the alkenyloxy group. Examples of the alkenyloxy group include an alkenyloxy group and a fluorine-containing alkenyloxy group, each having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

The alkynyloxy group represented by $R^{21}$ and $R^{22}$ may be linear or a branched chain. Any hydrogen atom of the alkynyloxy group may be substituted with a fluorine atom. An oxygen atom may be included in a carbon atom-carbon atom bond in the alkynyloxy group. In addition to the carbon-carbon triple bond, an unsaturated bond other than a carbon-carbon triple bond may be present in the alkynyloxy group. Examples of the alkynyloxy group include an alkynyloxy group and a fluorine-containing alkynyloxy group, each having 2 to 10 carbon atoms, such as an ethynyloxy group, a 2-propynyloxy group, and a 1,1-dimethyl-2-propynyloxy group.

Any hydrogen atom of the cycloalkoxy group represented by $R^{21}$ and $R^{22}$ may be substituted with at least one of an alkyl group and a fluorine atom. An oxygen atom may be included in a carbon atom-carbon atom bond in the cycloalkoxy group. Examples of the cycloalkoxy group include a cycloalkoxy group and a fluorine-containing cycloalkoxy group, each having 3 to 10 carbon atoms, such as a cyclopentyloxy group and a cyclohexyloxy group.

Any hydrogen atom of the cycloalkenyloxy group represented by $R^{21}$ and $R^{22}$ may be substituted with at least one of an alkyl group and a fluorine atom. An oxygen atom may be included in a carbon atom-carbon atom bond in the cycloalkenyloxy group. Examples of the cycloalkenyloxy group include a cycloalkenyloxy group and a fluorine-containing cycloalkenyloxy group, each having 3 to 10 carbon atoms, such as a cyclopentenyloxy group and a cyclohexenyloxy group.

Any hydrogen atom of the aryloxy group represented by $R^{21}$ and $R^{22}$ may be substituted with at least one of an alkyl group and a fluorine atom. Examples of the aryloxy group include an aryloxy group and a fluorine-containing aryloxy group, each having 6 to 10 carbon atoms, such as a phenyloxy group, a tolyloxy group, and a xylyloxy group.

Here, the compound represented by the general formula (2-A) contains at least one P-F bond. At least one of m $R^{21}$'s and m $R^{22}$'s preferably represents a fluorine atom.

$R^{21}$ and $R^{22}$ are preferably each independently a fluorine atom or an alkoxy group having a fluorine atom because the ionic conductivity in a solution or a composition increases due to improvement of the ion dissociation degree due to the strong electron-withdrawing property.

$R^{21}$ and $R^{22}$ are more preferably fluorine atoms because the ionic conductivity in a solution or a composition becomes very high due to the effect of improving the mobility due to a decrease in anion size.

Moreover, $R^{21}$ and $R^{22}$ each preferably have 6 or less carbon atoms. The number of carbon atoms is preferably 6 or less because the ionic conductivity tends to be relatively high.

In the general formula (2-A), $M_1{}^+$ represents a proton, a metal cation, or an onium cation. The type thereof is not particularly restricted as long as the performance of the nonaqueous electrolyte solution and the nonaqueous electrolyte solution battery of the present disclosure is not impaired, and various ones can be selected from the above.

When $M_1{}^{m+}$ represents a metal cation, examples of the metal cation include an alkali metal cation such as a lithium ion, a sodium ion, a potassium ion, a rubidium ion, and a cesium ion, an alkaline earth metal cation such as a magnesium ion, a calcium ion, and a barium ion, a silver ion, a copper ion, and an iron ion.

When $M_1{}^{m+}$ represents an onium cation, examples of the onium cation include an onium cation such as tetraalkylammonium, tetraalkylphosphonium, and an imidazolium derivative.

m represents the valence of the corresponding cation and may be 1 to 3 or 1 or 2.

$M_1{}^{m+}$ is preferably a lithium ion, a sodium ion, a potassium ion, a tetramethylammonium ion, a tetraethylammonium ion, a tetrabutylphosphonium ion, or the like particularly from the viewpoint of playing a role of helping the ionic conduction in a nonaqueous electrolyte solution battery.

Moreover, $M_1{}^{m+}$ is more preferably a lithium ion for use for a lithium ion battery application and is more preferably a sodium ion for use for a sodium ion battery application.

Specific examples of the anion structure of the compound represented by the general formula (2-A) are shown below, but the anion structure is not limited thereto.

[Chem. 12]

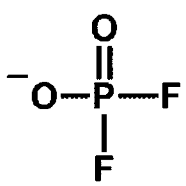

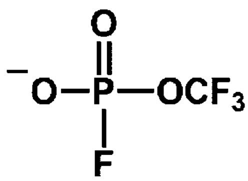

In the general formula (2-B), the alkyl group represented by $X^{21}$ may be linear or a branched chain. Any hydrogen atom of the alkyl group may be substituted with a fluorine atom. An oxygen atom may be included in a carbon atom-carbon

atom bond in the alkyl group. Here, the alkyl group contains at least one fluorine atom. Examples of the alkyl group include a fluorine-containing alkyl group having 1 to 10 carbon atoms, such as a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

The alkenyl group represented by $X^{21}$ may be linear or a branched chain. Any hydrogen atom of the alkenyl group may be substituted with a fluorine atom. An oxygen atom may be included in a carbon atom-carbon atom bond in the alkenyl group. In addition to the carbon-carbon double bond, an unsaturated bond other than a carbon-carbon double bond may be present in the alkenyl group. Here, the alkenyl group contains at least one fluorine atom.

The alkynyl group represented by $X^{21}$ may be linear or a branched chain. Any hydrogen atom of the alkynyl group may be substituted with a fluorine atom. An oxygen atom may be included in a carbon atom-carbon atom bond in the alkynyl group. In addition to the carbon-carbon triple bond, an unsaturated bond other than a carbon-carbon triple bond may be present in the alkynyl group. Here, the alkynyl group contains at least one fluorine atom.

Any hydrogen atom of the cycloalkyl group represented by $X^{21}$ may be substituted with at least one of an alkyl group and a fluorine atom. An oxygen atom may be included in a carbon atom-carbon atom bond in the cycloalkyl group. Here, the cycloalkyl group contains at least one fluorine atom.

Any hydrogen atom of the cycloalkenyl group represented by $X^{21}$ may be substituted with at least one of an alkyl group and a fluorine atom. An oxygen atom may be included in a carbon atom-carbon atom bond in the cycloalkenyl group. Here, the cycloalkenyl group contains at least one fluorine atom.

Any hydrogen atom of the aryl group represented by $X^{21}$ may be substituted with at least one of an alkyl group and a fluorine atom. Here, the aryl group contains at least one fluorine atom.

The alkoxy group represented by $X^{21}$ may be linear or a branched chain. Any hydrogen atom of the alkoxy group may be substituted with a fluorine atom. An oxygen atom may be included in a carbon atom-carbon atom bond in the alkoxy group. Here, the alkoxy group contains at least one fluorine atom. Examples of the alkoxy group include a fluorine-containing alkoxy group having 1 to 10 carbon atoms, such as a trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

The alkenyloxy group represented by $X^{21}$ may be linear or a branched chain. Any hydrogen atom of the alkenyloxy group may be substituted with a fluorine atom. An oxygen atom may be included in a carbon atom-carbon atom bond in the alkenyloxy group. In addition to the carbon-carbon double bond, an unsaturated bond other than a carbon-carbon double bond may be present in the alkenyloxy group. Here, the alkenyloxy group contains at least one fluorine atom.

The alkynyloxy group represented by $X^{21}$ may be linear or a branched chain. Any hydrogen atom of the alkynyloxy group may be substituted with a fluorine atom. An oxygen atom may be included in a carbon atom-carbon atom bond in the alkynyloxy group. In addition to the carbon-carbon triple bond, an unsaturated bond other than a carbon-carbon triple bond may be present in the alkynyloxy group. Here, the alkynyloxy group contains at least one fluorine atom.

Any hydrogen atom of the cycloalkoxy group represented by $X^{21}$ may be substituted with at least one of an alkyl group and a fluorine atom. An oxygen atom may be included in a carbon atom-carbon atom bond in the cycloalkoxy group. Here, the cycloalkoxy group contains at least one fluorine atom.

Any hydrogen atom of the cycloalkenyloxy group represented by $X^{21}$ may be substituted with at least one of an alkyl group and a fluorine atom. An oxygen atom may be included in a carbon atom-carbon atom bond in the cycloalkenyloxy group. Here, the cycloalkenyloxy group contains at least one fluorine atom.

Any hydrogen atom of the aryloxy group represented by $X^{21}$ may be substituted with at least one of an alkyl group and a fluorine atom. Here, the aryloxy group contains at least one fluorine atom.

In the general formula (2-B), $X^{21}$ is preferably the alkyl group or the alkoxy group because the internal resistance tends to be relatively small when a film is formed on the electrode.

In the general formula (2-B), $X^{21}$ is preferably a fluorine atom because the ionic conductivity in a solution or a composition increases due to improvement of the ion dissociation degree due to the strong electron-withdrawing property. In addition, $X^{21}$ is preferably a fluorine atom because the ionic conductivity in a solution or a composition becomes very high due to the effect of improving the mobility due to a decrease in anion size.

Moreover, $X^{21}$ preferably has 6 or less carbon atoms because the ionic conductivity tends to be relatively high. The number of carbon atoms is more preferably 1 to 4, and the number of carbon atoms is further preferably 1 to 3. Specific examples thereof include a trifluoromethyl group, a trifluoromethoxy group, and a trifluoroethoxy group, and a trifluoromethyl group, which has a small anion size, is particularly preferable.

The explanation, the specific examples, and the preferable ranges of $M_l^{m+}$ and m in the general formula (2-B) are the same as those for $M_1^{m+}$ and m in the general formula (2-A) described above.

Specific examples of the anion structure of the compound represented by the general formula (2-B) are shown below, but the anion structure is not limited thereto.

[Chem. 13]

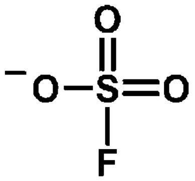
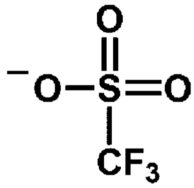

The explanation, the specific examples, and the preferable ranges of $X^{22}$ to $X^{25}$ in the general formula (2-C) are the same as those for $X^{21}$ in the general formula (2-B) described above. Here, $X^{22}$ to $X^{25}$ are each more preferably a fluorine atom or an alkyl group having a fluorine atom, and particularly preferably a fluorine atom.

The explanation, the specific examples, and the preferable ranges of $M_1^{m+}$ and m in the general formula (2-C) are the same as those for $M_1^{m+}$ and m in the general formula (2-A) described above.

Specific examples of the anion structure of the compound represented by the general formula (2-C) are shown below, but the anion structure is not limited thereto.

[Chem. 14]

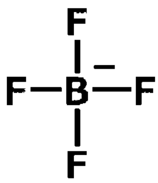
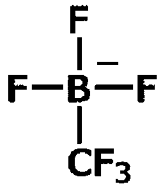

The compound (2) is preferably at least one compound selected from the group consisting of a difluorophosphate, a fluorosulfonate, a trifluoromethanesulfonate, and a tetrafluoroborate and more preferably at least one compound selected from the group consisting of lithium difluorophosphate, lithium fluorosulfonate, lithium trifluoromethanesulfonate, and lithium tetrafluoroborate.

The compound (3) is a compound represented by the following general formula (3).

[Chem. 15]

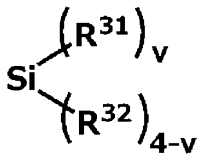
**(3)**

In the general formula (3), each $R^{31}$ represents a group having a carbon-carbon unsaturated bond. The plurality of $R^{31}$'s may be the same as or different from each other. Each $R^{32}$ represents a fluorine atom or an alkyl group having 1 to 10 carbon atoms, and the alkyl group may have at least one of a fluorine atom and an oxygen atom. When there are a plurality of $R^{32}$'s, the plurality of $R^{32}$'s may be the same as or different from each other. v represents an integer of 2 to 4.

Examples of the group having a carbon-carbon unsaturated bond represented by $R^{31}$ include an alkenyl group having 2 to 8 carbon atoms, such as a vinyl group, an allyl group, a l-propenyl group, an isopropenyl group, a 2-butenyl group, and a 1,3-butadienyl group, an alkenyloxy group derived from such a group, an alkynyl group having 2 to 8 carbon atoms, such as an ethynyl group, a 2-propynyl group, and a 1,1 dimethyl-2-propynyl group, an alkynyloxy group derived from such a group, an aryl group having 6 to 12 carbon atoms, such as a phenyl group, a tolyl group, and a xylyl group, and an aryloxy group derived from such a group. Moreover, the group may have a fluorine atom and an oxygen atom. Of these, a group containing a carbon-carbon unsaturated bond having 6 or less carbon atoms is preferable. When the number of carbon atoms is 6 or less, the resistance tends to be small when a film is formed on the electrode. The group having a carbon-carbon unsaturated bond represented by $R^{31}$ is preferably a group selected from the group consisting of a vinyl group, an allyl group, a l-propenyl group, an ethynyl group, and a 2-propynyl group.

The alkyl group represented by $R^{32}$ may be linear or a branched chain. Any hydrogen atom of the alkyl group may be substituted with a fluorine atom. An oxygen atom may be included in a carbon atom-carbon atom bond in the alkyl group. Examples of the alkyl group include a methyl group, an ethyl group, a propyl group, an isopropyl group, an n-butyl group, a sec-butyl group, an isobutyl group, a tert-butyl group, and a pentyl group. Moreover, the group may have at least one of a fluorine atom and an oxygen atom.

When $R^{32}$ is a fluorine atom or a group selected from the group consisting of a methyl group, an ethyl group, a

propyl group, a 2,2,2-trifluoroethyl group, a 2,2,3,3-tetrafluoropropyl group, a 1,1,1-trifluoroisopropyl group, and a 1,1,1,3,3,3-hexafluoroisopropyl group, the initial resistance tends to be smaller when a film is formed on the electrode, which is preferable from the viewpoint of the resulting output characteristic.

In the general formula (3), v represents an integer of 2 to 4 and is preferably 3 or 4 and particularly preferably 4.

Specific examples of the compound represented by the general formula (3) are shown below, but the compound is not limited thereto.

[Chem. 16]

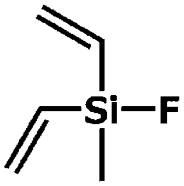
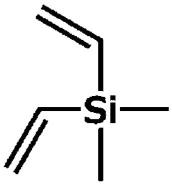
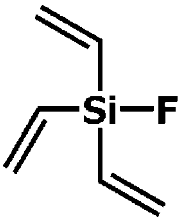
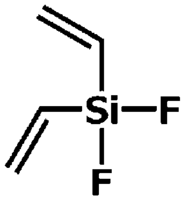
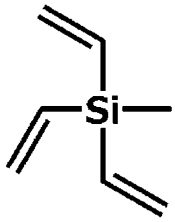
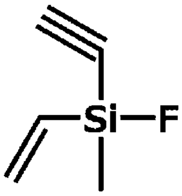
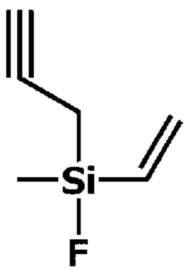
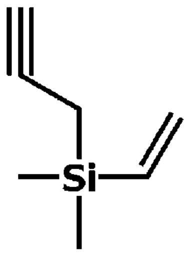
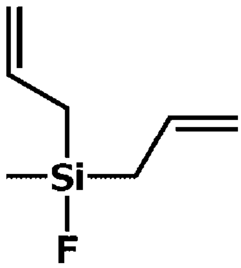
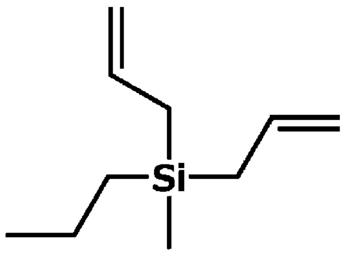
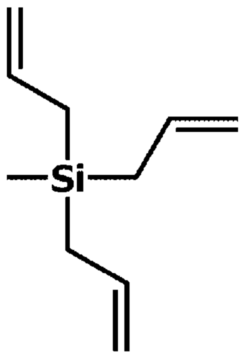
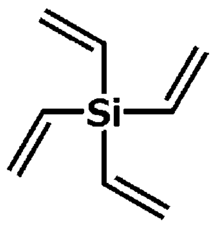
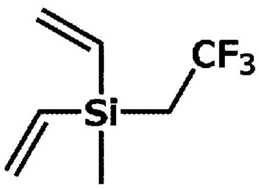
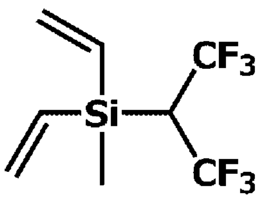
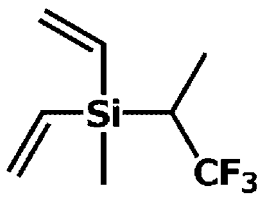
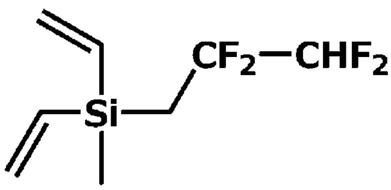
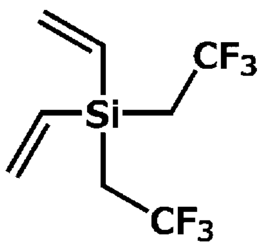
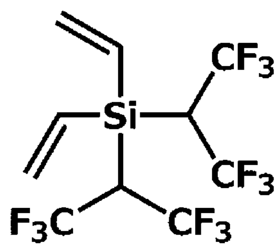

The compound (3) is preferably at least one compound selected from the group consisting of trivinylmethylsilane, trivinylfluorosilane, and tetravinylsilane.

The compound (4) is a compound represented by the following general formula (4).

[Chem. 17]

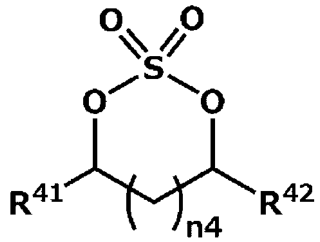

(4)

In the general formula (4), $R^{41}$ and $R^{42}$ each independently represent a hydrogen atom, an alkyl group having 1 or 2 carbon atoms, an alkenyl group having 2 to 5 carbon atoms, or an aryl group having 6 to 10 carbon atoms. Any hydrogen atom of the alkenyl group and the aryl group may be substituted with a halogen atom. n4 is 0 or 1.

Examples of the alkyl group represented by $R^{41}$ and $R^{42}$ include a methyl group and an ethyl group.

The alkenyl group represented by $R^{41}$ and $R^{42}$ may be linear or a branched chain. Examples of the alkenyl group include a vinyl group, an allyl group, a I-propenyl group, an isopropenyl group, a 2-butenyl group, and a 1,3-butadienyl group.

Any hydrogen atom of the aryl group represented by $R^{41}$ and $R^{42}$ may be substituted with an alkyl group. Examples of the aryl group include a phenyl group, a tolyl group, and a xylyl group.

At least any one of the hydrogen atoms of the alkenyl group and the aryl group may be substituted with a halogen atom. Examples of the halogen atom include a fluorine atom, a bromine atom, and an iodine atom, and a fluorine atom is preferable.

$R^{41}$ and $R^{42}$ preferably represent hydrogen atoms.

When n4 is 0, the carbon atom to which $R^{41}$ is bonded and the carbon atom to which $R^{42}$ is bonded are bonded by a single bond.

The compound (4) is preferably at least one compound selected from the group consisting of 1,3,2-dioxathiolane-2,2-dioxide and 1,3,2-dioxathiane-2,2-dioxide.

Specific examples of the compound represented by the general formula (4) are shown below, but the compound is not limited thereto.

[Chem. 18]

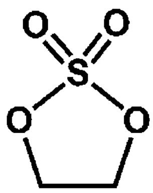
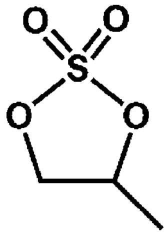
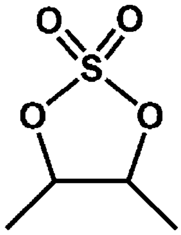
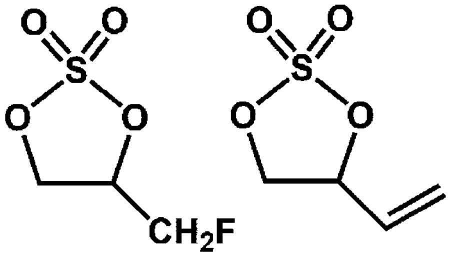
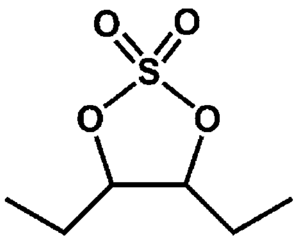
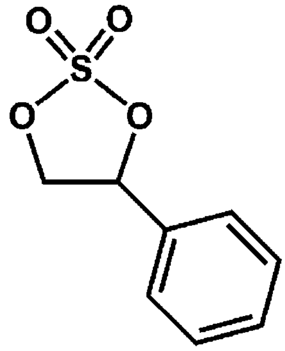
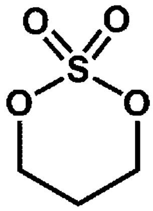
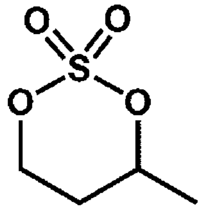
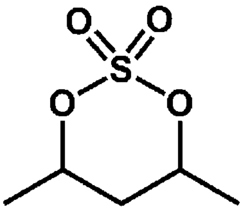
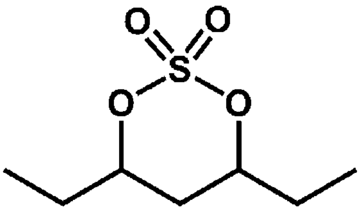
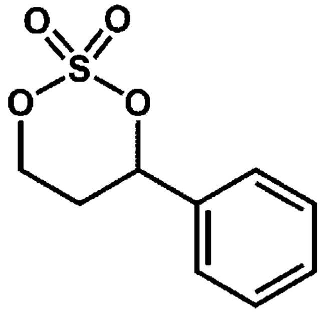
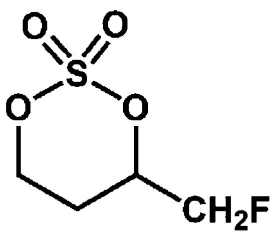
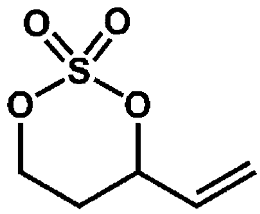

The compound (5) is a compound represented by the following general formula (5).

[Chem. 19]

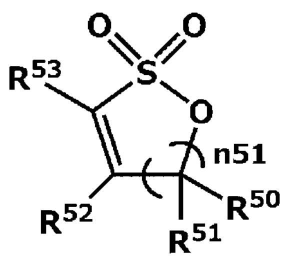

(5)

In the general formula (5), $R^{50}$ to $R^{53}$ each independently represent a hydrogen atom, a fluorine atom, an alkyl group having 1 to 5 carbon atoms, or a fluoroalkyl group having 1 to 4 carbon atoms. n51 represents an integer of 1 to 3.

In the general formula (5), the alkyl group represented by $R^{50}$ to $R^{53}$ may be linear or a branched chain. Examples of the alkyl group include a methyl group, an ethyl group, a propyl group, an isopropyl group, a butyl group, an isobutyl group, a sec-butyl group, a tert-butyl group, and a pentyl group.

The fluoroalkyl group represented by $R^{50}$ to $R^{53}$ may be linear or a branched chain. Examples of the fluoroalkyl group include a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

$R^{50}$ to $R^{53}$ are each preferably a hydrogen atom, a fluorine atom, or a trifluoromethyl group and more preferably a hydrogen atom.

In the general formula (5), n51 represents an integer of 1 to 3, may be 1 or 2 and is preferably 1.

Examples of the compound (5) include 1,3-propene sultone (1-propene-1,3-sultone), 1,4-butene sultone, 2,4-pentene sultone, 3,5-pentene sultone, 1-fluoro-1,3-propene sultone, 1-trifluoromethyl-1,3-propene sultone, 1,1,1-trifluoro-2,4-butene sultone, 1,4-butene sultone, and 1,5-pentene sultone.

The compound (5) is preferably I-propene 1,3-sultone.

In the nonaqueous electrolyte solution of the present disclosure, one type of compound may be used alone as (II), or two or more types of compounds may be mixed and used in any combination and any ratio according to the application.

In the nonaqueous electrolyte solution of the present disclosure, the content of (II) with respect to the total amount of the nonaqueous electrolyte solution (also referred to as "concentration of (II)") may be 0.01% by mass or more and 10% by mass or less. The lower limit of the concentration of (II) may be 0.08% by mass or more, may be 0.1% by mass or more, or may be 0.2% by mass or more. The upper limit of the concentration of (II) may be 8% by mass or less, may be 6% by mass or less, or may be 5% by mass or less.

(III) Solute

The (III) solute (also referred to as "(III)") contained in the nonaqueous electrolyte solution of the present disclosure will be explained.

The (III) solute is not particularly limited and may be, for example, at least one selected from the group consisting of $LiPF_6$, $LiSbF_6$, $LiAsF_6$, $LiClO_4$, $LiN(CF_3SO_2)_2$, $LiN(FSO_2)_2$, $LiN(POF_2)_2$, $LiCF_3SO_3$, $LiC_4F_9SO_3$, $LiAlO_2$, $LiAlCl_4$, LiCl, and LiI or at least one selected from the group consisting of $NaPF_6$, $NaSbF_6$, $NaAsF_6$, $NaClO_4$, $NaN(CF_3SO_2)_2$, $NaN(FSO_2)_2$, $NaN(POF_2)_2$, $NaCF_3SO_3$, $NaC_4F_9SO_3$, $NaAlO_2$, $NaAlCl_4$, NaCl, and NaI.

In the nonaqueous electrolyte solution of the present disclosure, one type of compound may be used alone as (III), or two or more types of compounds may be mixed and used in any combination and any ratio according to the application.

The concentration of (III) with respect to the total amount of the nonaqueous electrolyte solution is not particularly restricted. For example, the lower limit of the concentration of (III) may be 0.5 mol/L or more, may be 0.7 mol/L or more, or may be 0.9 mol/L or more. The upper limit of the concentration of (III) may be 2.5 mol/L or less, may be 2 mol/L or less, or may be 1.5 mol/L or less. Here, when two or more types are used as (III), the total concentration of these solutes is preferably in the above range.

The liquid temperature for dissolving (III) in (IV) a nonaqueous organic solvent is not particularly limited but may be -20 to 80°C or 0 to 60°C.

(IV) Nonaqueous Organic Solvent

The (IV) nonaqueous organic solvent (also referred to as "(IV)") contained in the nonaqueous electrolyte solution of the present disclosure will be explained. The type of the (IV) nonaqueous organic solvent is not particularly limited, and any nonaqueous organic solvent can be used.

Specific examples of the (IV) nonaqueous organic solvent include the following nonaqueous organic solvents.

Examples of the cyclic ester include cyclic carbonates such as propylene carbonate (hereinafter, sometimes referred to as "PC"), ethylene carbonate (hereinafter, sometimes referred to as "EC"), fluoroethylene carbonate (hereinafter, sometimes referred to as "FEC"), and butylene carbonate, as well as γ-butyrolactone and γ-valerolactone. Here, when the FEC content with respect to the total amount of the nonaqueous electrolyte solution is 10.0% by mass or less, the FEC is defined as the other additive described later.

Examples of the chain ester include chain carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), and methyl propyl carbonate, as well as methyl acetate, methyl propionate, and ethyl propionate (hereinafter, sometimes referred to as "EP").

Examples of the cyclic ether include tetrahydrofuran, 2-methyltetrahydrofuran, and dioxane.

Examples of the chain ether include dimethoxyethane and diethyl ether.

Other examples include sulfone compounds and sulfoxide compounds such as dimethyl sulfoxide and sulfolane. In addition, an ionic liquid and the like can also be exemplified.

The (IV) nonaqueous organic solvent may contain at least one selected from the group consisting of a cyclic ester, a chain ester, a cyclic ether, a chain ether, a sulfone compound, a sulfoxide compound, and an ionic liquid.

The cyclic ester may be a cyclic carbonate, and the cyclic carbonate may be at least one selected from the group consisting of ethylene carbonate, propylene carbonate, and fluoroethylene carbonate.

The chain ester may be a chain carbonate, and the chain carbonate may be at least one selected from the group consisting of ethyl methyl carbonate, dimethyl carbonate, diethyl carbonate, and methyl propyl carbonate.

In the nonaqueous electrolyte solution of the present disclosure, one type of compound may be used alone as (IV), or two or more types of compounds may be mixed and used in any combination and any ratio according to the application.

The cyclic carbonate content is not particularly restricted and is any content as long as the effects of the present disclosure are not significantly impaired, but the content in the case where one type is used alone may be 3% by volume or more, or may be more preferably 5% by volume or more in 100% by volume of the nonaqueous organic solvent. Within this range, a decrease in the electric conductivity due to a decrease in the permittivity of the nonaqueous electrolyte solution is avoided, and the large current discharge characteristic of the nonaqueous electrolyte solution battery, the stability with respect to the negative electrode, and the cycle characteristic can be easily set in excellent ranges. The content may be 90% by volume or less, may be preferably 85% by volume or less, or may be more preferably 80% by volume or less. Within this range, the viscosity of the nonaqueous electrolyte solution is set in an appropriate range, a decrease in the ionic conductivity is suppressed, and thus the load characteristic of the nonaqueous electrolyte solution battery is easily set in an excellent range.

Moreover, two or more types of cyclic carbonate can be used in any combination. One of preferable combinations is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly restricted and is any amount as long as the effects of the present disclosure are not significantly impaired, but the amount may be 1% by volume or more, preferably 2% by volume or more, and more preferably 3% by volume or more, and may be 30% by volume or less, preferably 25% by volume or less, and more preferably 20% by volume or less. Propylene carbonate is preferably contained in this range because the low-temperature characteristic is more excellent while the characteristics of the combination of ethylene carbonate and a dialkyl carbonates are maintained.

One type of chain ester may be used alone, or two or more types may be used in any combination and at any ratio.

The chain ester content is not particularly limited but may be 15% by volume or more, may be preferably 20% by volume or more, or may be more preferably 25% by volume or more in 100% by volume of the nonaqueous organic solvent. The content may be 90% by volume or less, may be preferably 85% by volume or less, or may be more preferably 80% by volume or less. When the chain ester content is in the above range, the viscosity of the nonaqueous electrolyte solution is set in an appropriate range, a decrease in the ionic conductivity is suppressed, and thus the input/output characteristic and the charge-discharge rate characteristic of the nonaqueous electrolyte solution battery are easily set in excellent ranges. In addition, a decrease in the electric conductivity due to a decrease in the permittivity of the nonaqueous electrolyte solution is avoided, and the input/output characteristic and the charge-discharge rate characteristic of the nonaqueous electrolyte solution battery are easily set in excellent ranges.

Further, by combining ethylene carbonate with a specific chain ester in a specific content, the battery performance can be significantly improved.

For example, when dimethyl carbonate and ethyl methyl carbonate are selected as specific chain esters, the ethylene carbonate content is not particularly restricted and is any content as long as the effects of the present disclosure are not significantly impaired, but the content may be 5% by volume or more and preferably 10% by volume or more, and may be 45% by volume or less and preferably 40% by volume or less. The dimethyl carbonate content may be 20% by volume or more and preferably 30% by volume or more, and may be 50% by volume or less and preferably 45% by volume or less. The ethyl methyl carbonate content may be 20% by volume or more and preferably 30% by volume or more, and may be 50% by volume or less and preferably 45% by volume or less. When the contents are within the above ranges, the viscosity of the nonaqueous electrolyte solution is decreased, the ionic conductivity is improved, and high input/output can be obtained even at a low temperature while the low-temperature precipitation temperature of the electrolyte is decreased.

The chain ether content is not particularly restricted and is any content as long as the effects of the present disclosure are not significantly impaired, but the content may be 1% by volume or more, preferably 2% by volume or more, and more preferably 3% by volume or more, and may be 30% by volume or less, preferably 25% by volume or less, and more preferably 20% by volume or less in 100% by volume of the nonaqueous organic solvent. When the chain ether content is within the above range, it is easy to secure the effect of improving the ionic conductivity of the chain ether due to improvement in the lithium ion dissociation degree and a decrease in the viscosity. When the negative electrode active material is a carbonaceous material, the phenomenon in which the chain ether is co-intercalated with lithium ions can be suppressed, and thus the input/output characteristic and the charge-discharge rate characteristic can be set in appropriate ranges.

The sulfone compound content is not particularly restricted and is any content as long as the effects of the present disclosure are not significantly impaired, but the content may be 0.3% by volume or more, preferably 0.5% by volume or

more, and more preferably 1% by volume or more, and may be 40% by volume or less, preferably 35% by volume or less, and more preferably 30% by volume or less in 100% by volume of the nonaqueous organic solvent. When the sulfone compound content is within the above range, the effect of improving the durability such as the cycle characteristic and the storage characteristic can be easily obtained, the viscosity of the nonaqueous electrolyte solution can be set in an appropriate range, a decrease in the electric conductivity can be avoided, and the input/output characteristic and the charge-discharge rate characteristic of the nonaqueous electrolyte solution battery can be set in appropriate ranges.

Other Additives

The basic configuration of the nonaqueous electrolyte solution of the present disclosure has been described above, but an additive which is generally used or the like may be added to the nonaqueous electrolyte solution of the present disclosure at any ratio as long as the gist of the present disclosure is not impaired.

When the nonaqueous electrolyte solution of the present disclosure contains another additive, the other additive content may be 0.01% by mass or more and 10% by mass or less with respect to the total amount of the nonaqueous electrolyte solution.

Specific examples of the other additive include vinylene carbonate (hereinafter, sometimes referred to as "VC"), an oligomer of vinylene carbonate (number average molecular weight in terms of polystyrene is 170 to 5000), fluoroethylene carbonate, trans-difluoroethylene carbonate, 1,6-diisocyanatohexane, ethynyl ethylene carbonate, 1,3-propane sultone (hereinafter, sometimes referred to as "1,3-PS"), methylene methane disulfonate, methane sulfonyl fluoride, tris(trimethylsilyl)borate, (ethoxy)pentafluorocyclotriphosphazene, tetrafluoro(picolinato)phosphate, difluoro(picolinato) borate, 1,3-dimethyl-1,3-divinyl-1,3-di(1,1,1,3,3,3-hexafluoroisopropyl)disiloxane, t-butylbenzene, t-amylbenzene, fluorobenzene, cyclohexylbenzene, biphenyl, difluoroanisole, dimethylvinylene carbonate, and nitrate. By adding the additive to the nonaqueous electrolyte solution of the present disclosure, at least one of the overcharge prevention effect, the negative electrode film formation effect, and the positive electrode protection effect may be improved.

The nonaqueous electrolyte solution of the present disclosure is suitably used for a nonaqueous electrolyte solution battery (preferably a nonaqueous electrolyte solution secondary battery).

2. Nonaqueous Electrolyte Solution Battery

The nonaqueous electrolyte solution battery of the present disclosure includes at least the nonaqueous electrolyte solution of the present disclosure described above, a negative electrode, and a positive electrode. Further, a separator, an exterior body, and the like may be included.

The nonaqueous electrolyte solution battery of the present disclosure preferably includes at least a positive electrode, a negative electrode, a separator, and the nonaqueous electrolyte solution of the present disclosure.

The nonaqueous electrolyte solution battery of the present disclosure is preferably a nonaqueous electrolyte solution secondary battery.

The negative electrode is not particularly limited, but a material capable of reversibly intercalating and deintercalating alkali metal ions such as lithium ions and sodium ions, or alkaline earth metal ions may be used.

For example, in the case of a lithium ion secondary battery in which cations are mainly lithium, the negative electrode active material constituting the negative electrode is one capable of doping and dedoping lithium ions. Examples of the negative electrode active material include a material containing at least one selected from a carbon material in which the d value of the lattice plane (002) plane in X-ray diffraction is 0.340 nm or less, a carbon material in which the d value of the lattice plane (002) plane in X-ray diffraction exceeds 0.340 nm, oxides of one or more metals selected from Si, Sn, and Al, one or more metals selected from Si, Sn, and Al, alloys containing these metals, alloys of the metals or the alloys and lithium, and lithium titanium oxide. One type of these negative electrode active materials can be used alone, or two or more types thereof can be used in combination. Lithium metal, a metal nitride, a tin compound, a conductive polymer, and the like may also be used.

For example, in the case of a sodium ion secondary battery in which the cations are mainly sodium, as the negative electrode active material constituting the negative electrode, sodium metal, an alloy of sodium metal and another metal such as tin, an intermetallic compound of sodium metal and another metal, various carbon materials such as hard carbon, a metal oxide such as titanium oxide, a metal nitride, (elemental) tin, a tin compound, activated carbon, a conductive polymer, and the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like may be used. One type of these negative electrode active materials may be used alone, or two or more types thereof may be used in combination.

The positive electrode is not particularly limited, but a material capable of reversibly intercalating and deintercalating alkali metal ions such as lithium ions and sodium ions, or alkaline earth metal ions may be used.

For example, when the cation is lithium, lithium-containing transition metal oxide composites such as $LiCoO_2$,

$LiNiO_2$, $LiMnO_2$, and $LiMn_2O_4$, lithium-containing transition metal oxide composites including a mixture of a plurality of transition metals in the lithium-containing transition metal oxide composites such as Co, Mn, and Ni, lithium-containing transition metal oxide composites in which a part of the transition metals in the lithium-containing transition metal oxide composites is substituted with a metal other than the transition metals, phosphate compounds of transition metals such as $LiFePO_4$, $LiCoPO_4$, and $LiMnPO_4$ referred to as olivine, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material.

For example, when the cation is sodium, sodium-containing transition metal oxide composites such as $NaCrO_2$, $NaFe_{0.5}Co_{0.5}O_2$, $NaFe_{0.4}Mn_{0.3}Ni_{0.3}O_2$, $NaNi_{0.3}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}$O2, $Na_{2/3}Ni_{1/3}Ti_{1/6}Mn_{1/2}O_2$, and $Na_{2/3}Ni_{1/3}Mn_{2/3}O_2$, sodium-containing transition metal oxide composites including a mixture of a plurality of transition metals in the sodium-containing transition metal oxide composites such as Co, Mn, and Ni, sodium-containing transition metal oxide composites in which a part of the transition metals in the sodium-containing transition metal oxide composites is substituted with a metal other than the transition metals, polyanion type compounds such as $NaFePO_4$, $NaVPO_4F$, $Na_3V_2(PO_4)_3$, and $Na_2Fe_2(SO_4)_3$, sodium salts of Prussian Blue analogues represented by a compositional formula $Na_aM_b[Fe(CN)_6]_c$ (M represents Cr, Mn, Fe, Co, Ni, Cu, or Zn, $0 \leq a \leq 2$, $0.5 \leq b \leq 1.5$, and $0.5 \leq c \leq 1.5$), oxides such as $TiO_2$, $V_2O_2$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material (positive electrode active material).

Acetylene black, Ketjen black, carbon fibers, or graphite as a conductive material, and polytetrafluoroethylene, polyvinylidene fluoride, SBR resin, or the like as a binder may be added to the positive electrode and negative electrode materials, and an electrode sheet molded into a sheet shape may also be used.

As a separator for preventing contact between the positive electrode and the negative electrode, a nonwoven fabric or a porous sheet made of polypropylene, polyethylene, paper, glass fibers, or the like may be used.

An electrochemical device having a shape such as a coin shape, a cylindrical shape, a square shape, or an aluminum laminate sheet shape is assembled with the above elements.

## EXAMPLES

Hereinafter, the present disclosure will be specifically explained with Examples, but the present disclosure is not limited by these Examples.

[Examples 1-1 to 1-67 and Comparative Examples 1-1 to 1-37]

<Preparation of Nonaqueous Electrolyte Solution>

EC, EMC, and DMC were mixed as (IV) in a volume ratio of EC:EMC:DMC = 25:50:25 in a glove box with a dew point of -60°C or lower. Then, while maintaining the internal temperature at 40°C or lower and stirring, $LiPF_6$ as (III) was added and dissolved at a concentration of 1.0 mol/L with respect to the total amount of the nonaqueous electrolyte solution, and the compound (1-1) as (I) was added and dissolved at a concentration of 0.5% by mass with respect to the total amount of the nonaqueous electrolyte solution. The solution was stirred for one hour to prepare the nonaqueous electrolyte solution of Comparative Example 1-1.

In addition, as shown in Tables 1 to 4, the nonaqueous electrolyte solutions of the Examples and the Comparative Examples were prepared by the same procedure as that of the nonaqueous electrolyte solution of Comparative Example 1-1 except that the type and the concentration of (I) were changed, the type and the concentration of (II) were changed, and the type and the concentration of the other additive were changed.

The compounds used in the Examples and the Comparative Examples are shown below. Only the compound numbers are shown in the tables.

(1-1): 1,2-ethanedisulfonic anhydride
(1-2): 1,3-propanedisulfonic anhydride
(2-1): lithium difluorophosphate
(2-2): lithium fluorosulfonate
(2-3): lithium tetrafluoroborate
(3-1): trivinylmethylsilane
(3-2): trivinylfluorosilane
(3-3): tetravinylsilane
(4-1): 1,3,2-dioxathiolane-2,2-dioxide
(5-1): 1-propene-1,3-sultone

(1-R): 2,1,3-benzoxadithiol-1,1,3,3-tetraoxide
(3- R): trimethylvinylsilane

(Production of NCM811 Positive Electrode)

In 92.0% by mass of $LiNi_{0.8}Mn_{0.1}Co_{0.1}O_2$ powder, 3.5% by mass of polyvinylidene fluoride (hereinafter also referred to as "PVDF") as a binder and 4.5% by mass of acetylene black as a conductive material were mixed, and 45% by mass of N-methyl-2-pyrrolidone (hereinafter also referred to as "NMP") with respect to the total mass of the $LiNi_{0.8}Mn_{0.1}Co_{0.1}O_2$ powder, the binder, and the conductive material was added to produce a positive electrode mixture paste. The paste was applied onto both sides of an aluminum foil (A1085), dried, pressed and then punched into 4 cm × 5 cm to obtain an NCM811 positive electrode for testing.

(Production of Natural Graphite Negative Electrode)

By mixing 97.0% by mass of natural graphite powder, 2.0% by mass of styrene-butadiene rubber as a binder, 1.0% by mass of sodium carboxymethyl cellulose, and water, a negative electrode mixture paste was produced. The paste was applied onto one side of a copper foil, dried, pressed and then punched into 4.5 cm × 5.5 cm to obtain a natural graphite negative electrode for testing.

(Production of Silicon-Containing Graphite Negative Electrode)

By mixing 7.0% by mass of nanosilicon, 3.0% by mass of a conductive material (HS-100 manufactured by Denka Company Limited), 2.0% by mass of carbon nanofiber (VGCF manufactured by Showa Denko K.K.), 2.0% by mass of styrene-butadiene rubber (hereinafter also referred to as "SBR"), 1.0% by mass of sodium carboxymethyl cellulose (hereinafter also referred to as "CMC"), and water in 85.0% by mass of artificial graphite powder, a negative electrode mixture paste was produced. The paste was applied onto a copper foil, dried, pressed and then punched into 4.5 cm × 5.5 cm to obtain a silicon-containing graphite negative electrode for testing.

(Production of Nonaqueous Electrolyte Solution Batteries Shown in Tables 1 to 4)

Under an argon atmosphere at a dew point of -50°C or lower, a terminal was welded to the above NCM811 positive electrode, and both sides of the welded product were then sandwiched between two polyethylene separators (5 cm × 6 cm). Further, the outside of the sandwiched product was sandwiched between two natural graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution prepared above was vacuum-injected into the bag, the opening was sealed with heat. In this manner, the aluminum laminated nonaqueous electrolyte solution batteries of the Examples and the Comparative Examples shown in Tables 1 to 4 below were produced.

(Evaluation of Nonaqueous Electrolyte Solution Battery)

-Initial Charge and Discharge-

The produced nonaqueous electrolyte solution battery was put in a constant temperature bath at 25°C and, in this state, connected to a charge and discharge device. The battery was charged to 4.2 V at a current density of 0.38 $mA/cm^2$. After 4.2 V was maintained for one hour, the battery was discharged to 2.5 V at a current density of 0.38 $mA/cm^2$. This was defined as one charge and discharge cycle, and three cycles of charge and discharge in total were performed to stabilize the battery. The discharge capacity in the third cycle was defined as the initial charge-discharge capacity.

<Initial Resistance>

After the initial charge and discharge, the battery was charged to 4.2 V at 25°C and 0.38 $mA/cm^2$, and the resistance value (initial resistance) was directly measured by impedance measurement.

<High-Temperature Storage Characteristic>

The nonaqueous electrolyte solution battery after the initial charge and discharge was charged at an upper limit charge voltage of 4.2 V and 0.38 $mA/cm^2$, then taken out of the charge and discharge device maintained at 25°C and stored

in a constant temperature bath at 60°C for 14 days. Then, the battery was placed in a charge and discharge device maintained at 25°C and discharged at 0.38 mA/$cm^2$ to a discharge end voltage of 2.5 V, and the degree of deterioration of the cell was evaluated with the discharge capacity retention rate after storage. After the discharge, the battery was charged to 4.2 V at a current density of 0.38 mA/$cm^2$ and then discharged to 2.5 V at a current density of 0.38 mA/$cm^2$, and the capacity obtained at that time was defined as the discharge capacity after storage at 60°C. The discharge capacity retention rate after storage at 60°C was determined by the following equation.

(Discharge Capacity Retention Rate after Storage at 60°C)

Discharge capacity retention rate (%) after storage at 60°C = (discharge capacity after storage at 60°C/initial charge-discharge capacity) × 100

(Resistance Value after Storage at 60°C)

Next, the battery was charged to 4.2 V at 25°C and 0.38 mA/$cm^2$, and the resistance value (resistance value after storage at 60°C) was directly measured by impedance measurement.

In Tables 1 to 4 below, the initial resistance values are relative values based on the value of Comparative Example 1-1 regarded as 100. "E1" indicates the discharge capacity retention rates after storage at 60°C (the relative values based on the value of Comparative Example 1-1 regarded as 100), and "E2" indicates the resistance values after storage at 60°C (the relative values based on the value of Comparative Example 1-1 regarded as 100).

[Table 1]

Table 1

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-1 | (1-1) 0.5 | - | - | 100 | 100 | 100 |
| Comparative Example 1-2 | (1-1) 1.0 | - | - | 103 | 102 | 98 |
| Comparative Example 1-3 | (1-2) 0.5 | - | - | 106 | 101 | 95 |
| Comparative Example 1-4 | (1-2) 1.0 | - | - | 112 | 103 | 92 |
| Comparative Example 1-5 | - | - | (1-R) 0.5 | 109 | 98 | 101 |
| Comparative Example 1-6 | - | - | (1-R) 1.0 | 118 | 100 | 98 |
| Comparative Example 1-7 | - | (2-1) 1.0 | - | 95 | 94 | 101 |
| Comparative Example 1-8 | - | (2-2) 1.0 | - | 100 | 98 | 101 |
| Comparative Example 1-9 | - | (2-3) 1.0 | - | 93 | 86 | 100 |
| Comparative Example 1-10 | (1-1) 1.0 | - | 1,3-PS 1.0 | 103 | 104 | 101 |
| Comparative Example 1-11 | (1-1) 1.0 | - | VC 1.0 | 98 | 108 | 97 |
| Comparative Example 1-12 | - | - | (1-R) 1.0<br>1,3-PS 1.0 | 112 | 98 | 117 |
| Comparative Example 1-13 | - | - | (1-R) 1.0<br>VC 1.0 | 110 | 101 | 106 |
| Comparative Example 1-14 | - | (2-1) 1.0 | (1-R) 1.0 | 110 | 101 | 102 |
| Comparative Example 1-15 | - | (2-2) 1.0 | (1-R) 1.0 | 116 | 103 | 104 |
| Comparative Example 1-16 | - | (2-3) 1.0 | (1-R) 1.0 | 105 | 98 | 99 |
| Comparative Example 1-17 | - | (2-1) 1.0 | VC 1.0 | 105 | 108 | 92 |
| Comparative Example 1-18 | - | (2-2) 1.0 | VC 1.0 | 108 | 110 | 93 |

(continued)

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-19 | - | (2-3) 1.0 | VC 1.0 | 103 | 105 | 90 |
| Example 1-1 | (1-1) 0.005 | (2-1) 1.0 | - | 93 | 109 | 96 |
| Example 1-2 | (1-1) 0.015 | (2-1) 1.0 | - | 83 | 118 | 87 |
| Example 1-3 | (1-1) 0.5 | (2-1) 1.0 | - | 78 | 125 | 79 |
| Example 1-4 | (1-1) 1.0 | (2-1) 1.0 | - | 82 | 138 | 70 |
| Example 1-5 | (1-1) 8.0 | (2-1) 1.0 | - | 90 | 120 | 83 |
| Example 1-6 | (1-1) 10.2 | (2-1) 1.0 | - | 94 | 111 | 92 |
| Example 1-7 | (1-1) 1.0 | (2-1) 0.005 | - | 87 | 118 | 81 |
| Example 1-8 | (1-1) 1.0 | (2-1) 0.015 | - | 86 | 126 | 72 |
| Example 1-9 | (1-1) 1.0 | (2-1) 0.5 | - | 79 | 130 | 68 |
| Example 1-10 | (1-1) 1.0 | (2-1) 1.5 | - | 84 | 129 | 74 |
| Example 1-11 | (1-1) 1.0 | (2-1) 8.0 | - | 90 | 119 | 80 |
| Example 1-12 | (1-1) 1.0 | (2-1) 11.0 | - | 93 | 111 | 88 |
| Example 1-13 | (1-1) 0.5 | (2-2) 1.0 | - | 84 | 132 | 83 |
| Example 1-14 | (1-1) 1.0 | (2-2) 1.0 | - | 89 | 143 | 72 |
| Example 1-15 | (1-1) 0.5 | (2-3) 1.0 | - | 77 | 119 | 75 |
| Example 1-16 | (1-1) 1.0 | (2-3) 1.0 | - | 80 | 132 | 67 |
| Example 1-17 | (1-2) 1.0 | (2-1) 1.0 | - | 92 | 140 | 63 |
| Example 1-18 | (1-2) 1.0 | (2-2) 1.0 | - | 97 | 146 | 65 |
| Example 1-19 | (1-2) 1.0 | (2-3) 1.0 | - | 89 | 134 | 59 |
| Example 1-20 | (1-1) 1.0 | (2-1) 1.0 | VC 1.0 | 85 | 141 | 63 |
| Example 1-21 | (1-1) 1.0 | (2-2) 1.0 | VC 1.0 | 92 | 149 | 66 |
| Example 1-22 | (1-1) 1.0 | (2-3) 1.0 | VC 1.0 | 84 | 135 | 64 |

[Table 2]

Table 2

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-1 | (1-1) 0.5 | - | - | 100 | 100 | 100 |
| Comparative Example 1-2 | (1-1) 1.0 | - | - | 103 | 102 | 98 |
| Comparative Example 1-3 | (1-2) 0.5 | - | - | 106 | 101 | 95 |
| Comparative Example 1-4 | (1-2) 1.0 | - | - | 112 | 103 | 92 |
| Comparative Example 1-5 | - | - | (1-R) 0.5 | 109 | 98 | 101 |
| Comparative Example 1-6 | - | - | (1-R) 1.0 | 118 | 100 | 98 |
| Comparative Example 1-20 | - | (3-1) 0.3 | - | 105 | 93 | 107 |
| Comparative Example 1-21 | - | (3-2) 0.3 | - | 110 | 93 | 116 |

(continued)

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-22 | - | (3-3) 0.3 | - | 106 | 94 | 109 |
| Comparative Example 1-23 | - | - | (3-R) 0.3 | 105 | 93 | 107 |
| Comparative Example 1-10 | (1-1) 1.0 | - | 1,3-PS 1.0 | 103 | 104 | 101 |
| Comparative Example 1-11 | (1-1) 1.0 | - | VC 1.0 | 98 | 108 | 97 |
| Comparative Example 1-12 | - | - | (1-R) 1.0 | 112 | 98 | 117 |
| | | | 1,3-PS 1.0 | | | |
| Comparative Example 1-13 | - | - | (1-R) 1.0 | 110 | 101 | 106 |
| | | | VC 1.0 | | | |
| Comparative Example 1-24 | - | (3-1) 0.3 | (1-R) 1.0 | 114 | 97 | 107 |
| Comparative Example 1-25 | - | (3-2) 0.3 | (1-R) 1.0 | 117 | 98 | 108 |
| Comparative Example 1-26 | - | (3-3) 0.3 | (1-R) 1.0 | 113 | 100 | 107 |
| Comparative Example 1-27 | - | - | (1-R) 1.0 | 113 | 98 | 108 |
| | | | (3-R) 0.3 | | | |
| Comparative Example 1-28 | (1-1) 0.5 | - | (3-R) 0.3 | 107 | 97 | 109 |
| Comparative Example 1-29 | (1-1) 1.0 | - | (3-R) 0.3 | 111 | 99 | 104 |
| Comparative Example 1-30 | - | (3-1) 0.3 | VC 1.0 | 112 | 97 | 112 |
| Comparative Example 1-31 | - | (3-2) 0.3 | VC 1.0 | 119 | 99 | 122 |
| Comparative Example 1-32 | - | (3-3) 0.3 | VC 1.0 | 115 | 98 | 116 |
| Example 1-23 | (1-1) 0.5 | (3-1) 0.3 | - | 87 | 123 | 92 |
| Example 1-24 | (1-1) 1.0 | (3-1) 0.3 | - | 91 | 135 | 83 |
| Example 1-25 | (1-1) 0.5 | (3-2) 0.3 | - | 95 | 122 | 93 |
| Example 1-26 | (1-1) 1.0 | (3-2) 0.3 | - | 97 | 135 | 85 |
| Example 1-27 | (1-1) 0.005 | (3-3) 0.3 | - | 99 | 102 | 102 |
| Example 1-28 | (1-1) 0.015 | (3-3) 0.3 | - | 94 | 111 | 98 |
| Example 1-29 | (1-1) 0.5 | (3-3) 0.3 | - | 88 | 125 | 94 |
| Example 1-30 | (1-1) 1.0 | (3-3) 0.3 | - | 91 | 139 | 83 |
| Example 1-31 | (1-1) 8.0 | (3-3) 0.3 | - | 95 | 116 | 97 |
| Example 1-32 | (1-1) 11.0 | (3-3) 0.3 | - | 99 | 105 | 99 |
| Example 1-33 | (1-1) 1.0 | (3-3) 0.005 | - | 97 | 107 | 94 |
| Example 1-34 | (1-1) 1.0 | (3-3) 0.015 | - | 94 | 114 | 91 |
| Example 1-35 | (1-1) 1.0 | (3-3) 0.1 | - | 91 | 122 | 85 |
| Example 1-36 | (1-1) 1.0 | (3-3) 1.0 | - | 94 | 128 | 90 |
| Example 1-37 | (1-1) 1.0 | (3-3) 7.0 | - | 98 | 111 | 94 |
| Example 1-38 | (1-1) 1.0 | (3-3) 11.0 | - | 99 | 106 | 97 |
| Example 1-39 | (1-1) 1.0 | (3-1) 0.3 | VC 1.0 | 94 | 139 | 80 |
| Example 1-40 | (1-1) 1.0 | (3-2) 0.3 | VC 1.0 | 99 | 138 | 83 |
| Example 1-41 | (1-1) 1.0 | (3-3) 0.3 | VC 1.0 | 93 | 144 | 78 |

[Table 3]

Table 3

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-1 | (1-1) 0.5 | - | - | 100 | 100 | 100 |
| Comparative Example 1-2 | (1-1) 1.0 | - | - | 103 | 102 | 98 |
| Comparative Example 1-3 | (1-2) 0.5 | - | - | 106 | 101 | 95 |
| Comparative Example 1-4 | (1-2) 1.0 | - | - | 112 | 103 | 92 |
| Comparative Example 1-5 | - | - | (1-R) 0.5 | 109 | 98 | 101 |
| Comparative Example 1-6 | - | - | (1-R) 1.0 | 118 | 100 | 98 |
| Comparative Example 1-33 | - | (4-1) 1.0 | - | 96 | 97 | 102 |
| Comparative Example 1-10 | (1-1) 1.0 | - | 1,3-PS 1.0 | 103 | 104 | 101 |
| Comparative Example 1-11 | (1-1) 1.0 | - | VC 1.0 | 98 | 108 | 97 |
| Comparative Example 1-12 | - | - | (1-R) 1.0<br>1,3-PS 1.0 | 112 | 98 | 117 |
| Comparative Example 1-13 | - | - | (1-R) 1.0<br>VC 1.0 | 110 | 101 | 106 |
| Comparative Example 1-34 | - | (4-1) 1.0 | (1-R) 1.0 | 106 | 101 | 100 |
| Comparative Example 1-35 | - | (4-1) 1.0 | VC 1.0 | 102 | 104 | 100 |
| Example 1-42 | (1-1) 0.005 | (4-1) 1.0 | - | 90 | 107 | 96 |
| Example 1-43 | (1-1) 0.015 | (4-1) 1.0 | - | 87 | 118 | 86 |
| Example 1-44 | (1-1) 0.5 | (4-1) 1.0 | - | 81 | 132 | 78 |
| Example 1-45 | (1-1) 1.0 | (4-1) 1.0 | - | 83 | 140 | 69 |
| Example 1-46 | (1-1) 8.0 | (4-1) 1.0 | - | 88 | 127 | 81 |
| Example 1-47 | (1-1) 10.2 | (4-1) 1.0 | - | 93 | 108 | 98 |
| Example 1-48 | (1-1) 1.0 | (4-1) 0.005 | - | 97 | 106 | 95 |
| Example 1-49 | (1-1) 1.0 | (4-1) 0.015 | - | 94 | 111 | 91 |
| Example 1-50 | (1-1) 1.0 | (4-1) 0.5 | - | 90 | 118 | 87 |
| Example 1-51 | (1-1) 1.0 | (4-1) 1.5 | - | 88 | 120 | 88 |
| Example 1-52 | (1-1) 1.0 | (4-1) 8.0 | - | 95 | 112 | 91 |
| Example 1-53 | (1-1) 1.0 | (4-1) 11.0 | - | 99 | 109 | 94 |
| Example 1-54 | (1-1) 1.0 | (4-1) 1.0 | VC 1.0 | 87 | 141 | 69 |

[Table 4]

Table 4

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-1 | (1-1) 0.5 | - | - | 100 | 100 | 100 |

(continued)

| | (I) Type and Concentration (% by mass) | (II) Type and Concentration (% by mass) | Other Additive Type and Concentration (% by mass) | Initial Resistance | E1 | E2 |
|---|---|---|---|---|---|---|
| Comparative Example 1-2 | (1-1) 1.0 | - | - | 103 | 102 | 98 |
| Comparative Example 1-3 | (1-2) 0.5 | - | - | 106 | 101 | 95 |
| Comparative Example 1-4 | (1-2) 1.0 | - | - | 112 | 103 | 92 |
| Comparative Example 1-5 | - | - | (1-R) 0.5 | 109 | 98 | 101 |
| Comparative Example 1-6 | - | - | (1-R) 1.0 | 118 | 100 | 98 |
| Comparative Example 1-35 | - | (5-1) 1.0 | - | 106 | 96 | 104 |
| Comparative Example 1-10 | (1-1) 1.0 | - | 1,3-PS 1.0 | 103 | 104 | 101 |
| Comparative Example 1-11 | (1-1) 1.0 | - | VC 1.0 | 98 | 108 | 97 |
| Comparative Example 1-12 | | - | (1-R) 1.0 | 112 | 98 | 117 |
| | | | 1,3-PS 1.0 | | | |
| Comparative Example 1-13 | - | - | (1-R) 1.0 | 110 | 101 | 106 |
| | | | VC 1.0 | | | |
| Comparative Example 1-36 | - | (5-1) 1.0 | (1-R) 1.0 | 113 | 102 | 101 |
| Comparative Example 1-37 | - | (5-1) 1.0 | VC 1.0 | 109 | 100 | 99 |
| Example 1-55 | (1-1) 0.005 | (5-1) 1.0 | - | 96 | 105 | 97 |
| Example 1-56 | (1-1) 0.015 | (5-1) 1.0 | - | 90 | 118 | 89 |
| Example 1-57 | (1-1) 0.5 | (5-1) 1.0 | - | 83 | 130 | 83 |
| Example 1-58 | (1-1) 1.0 | (5-1) 1.0 | - | 79 | 139 | 78 |
| Example 1-59 | (1-1) 8.0 | (5-1) 1.0 | - | 88 | 116 | 90 |
| Example 1-60 | (1-1) 10.2 | (5-1) 1.0 | - | 99 | 104 | 100 |
| Example 1-61 | (1-1) 1.0 | (5-1) 0.005 | - | 99 | 107 | 96 |
| Example 1-62 | (1-1) 1.0 | (5-1) 0.015 | - | 92 | 112 | 91 |
| Example 1-63 | (1-1) 1.0 | (5-1) 0.5 | - | 87 | 119 | 87 |
| Example 1-64 | (1-1) 1.0 | (5-1) 1.5 | - | 82 | 122 | 84 |
| Example 1-65 | (1-1) 1.0 | (5-1) 8.0 | - | 90 | 111 | 88 |
| Example 1-66 | (1-1) 1.0 | (5-1) 11.0 | - | 99 | 106 | 94 |
| Example 1-67 | (1-1) 1.0 | (5-1) 1.0 | VC 1.0 | 85 | 143 | 75 |

From Tables 1 to 4, it can be seen that, when the results are compared under the condition that the type and the concentration of (II) are the same and the type and the concentration of the other additive are the same, the nonaqueous electrolyte solution batteries including the nonaqueous electrolyte solutions of the Examples had lower initial resistance than the nonaqueous electrolyte solution batteries including the nonaqueous electrolyte solutions of the corresponding Comparative Examples. In addition, it can be seen that the nonaqueous electrolyte solution batteries including the nonaqueous electrolyte solutions of the Examples had larger E1 and smaller E2 than the nonaqueous electrolyte solution batteries including the nonaqueous electrolyte solutions of the Comparative Examples.

It can be seen that the effect of reducing the initial resistance was easily exhibited when the concentration of (I) was 0.01% by mass or more and 10% by mass or less and that the initial resistance was the lowest when the concentration was 0.1% by mass or more and 1.5% by mass or less. In addition, it can be seen that the nonaqueous electrolyte solution batteries including the nonaqueous electrolyte solutions of the Examples had larger E1 and smaller E2 than the nonaqueous electrolyte solution batteries including the nonaqueous electrolyte solutions of the corresponding Comparative Examples.

When the type of (I) is focused, it can be seen from the comparison between Example 1-4 and Example 1-17 in Table 1 that (1-1) had a higher effect of reducing the initial resistance than (1-2).

When the type of the compound (2) is focused, it can be seen that the degree of the effect of reducing the initial resistance was (2-3) > (2-1) > (2-2) from the comparison among Example 1-3, Example 1-13, and Example 1-15, the comparison among Example 1-4, Example 1-14, and Example 1-16, the comparison among Example 1-17, Example 1-18, and Example 1-19, and the comparison among Example 1-20, Example 1-21, and Example 1-22 in Table 1.

When the type of the compound (3) is focused, it can be seen that the degree of the effect of reducing the initial resistance was (3-1) ≈ (3-3) > (3-2) from the comparison among Example 1-23, Example 1-25, and Example 1-29, the comparison among Example 1-24, Example 1-26, and Example 1-30, and the comparison among Example 1-39, Example 1-40, and Example 1-41 in Table 2.

[Examples 2-1 to 2-59 and Comparative Examples 2-1 to 2-28]

<Preparation of Nonaqueous Electrolyte Solution>

EC, EMC, and DMC were mixed as (IV) in a volume ratio of EC:EMC:DMC = 25:50:25 in a glove box with a dew point of -60°C or lower. Then, while maintaining the internal temperature at 40°C or lower and stirring, $LiPF_6$ as (III) was added and dissolved at a concentration of 1.0 mol/L with respect to the total amount of the nonaqueous electrolyte solution, the compound (1-1) as (I) was added and dissolved at a concentration of 0.5% by mass with respect to the total amount of the nonaqueous electrolyte solution, and FEC and VC as the other additives were added and dissolved at concentrations of 5.0% by mass and 2.0% by mass, respectively, with respect to the total amount of the nonaqueous electrolyte solution. The solution was stirred for one hour to prepare the nonaqueous electrolyte solution of Comparative Example 2-1.

In addition, as shown in Tables 5 to 10, the nonaqueous electrolyte solutions of the Examples and the Comparative Examples were prepared by the same procedure as that of the nonaqueous electrolyte solution of Comparative Example 2-1 except that the type and the concentration of (I) were changed, the type and the concentration of (II) were changed, and the types and the concentrations of the other additives were changed.

(Production of Nonaqueous Electrolyte Solution Batteries Shown in Tables 5 to 10)

Under an argon atmosphere at a dew point of -50°C or lower, a terminal was welded to the above NCM811 positive electrode, and both sides of the welded product were then sandwiched between two polyethylene separators (5 cm × 6 cm). Further, the outside of the sandwiched product was sandwiched between two silicon-containing graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution prepared above was vacuum-injected into the bag, the opening was sealed with heat. In this manner, the aluminum laminated nonaqueous electrolyte solution batteries of the Examples and the Comparative Examples shown in Tables 5 to 10 below were produced.

(Evaluation of Nonaqueous Electrolyte Solution Battery)

-Initial Charge and Discharge-

The produced nonaqueous electrolyte solution battery was put in a constant temperature bath at 25°C and, in this state, connected to a charge and discharge device. The battery was charged to 4.2 V at a current density of 0.38 $mA/cm^2$. After 4.2 V was maintained for one hour, the battery was discharged to 2.5 V at a current density of 0.38 $mA/cm^2$. This was defined as one charge and discharge cycle, and three cycles of charge and discharge in total were performed to stabilize the battery.

<Initial Resistance>

After the initial charge and discharge, the battery was charged to 4.2 V at 25°C and 0.38 $mA/cm^2$, and the resistance value (initial resistance) was directly measured by impedance measurement.

<Cycle Characteristic Test at 25°C>

A charge and discharge test at an ambient temperature of 25°C was performed to evaluate the cycle characteristic. The battery was charged to 4.2 V and discharged to 2.5 V, and the charge and discharge cycle was

repeated at a current density of 1.9 mA/cm$^2$. Then, the degree of deterioration of the cell was evaluated with the discharge capacity retention rate after 200 cycles. The discharge capacity retention rate after 200 cycles was determined by the following equation. The discharge capacity in the first cycle in the cycle characteristic test at the ambient temperature of 25°C was defined as the initial discharge capacity.

(Discharge Capacity Retention Rate after 200 Cycles)

Discharge capacity retention rate (%) after 200 cycles = (discharge capacity after 200 cycles/initial discharge capacity) $\times$ 100

(Resistance Value after 200 Cycles)

The nonaqueous electrolyte solution battery after the cycle characteristic test was charged to 4.2 V at 25°C and 0.38 mA/cm$^2$, and the resistance value (resistance value after 200 cycles) was directly measured by impedance measurement.

In Tables 5 to 10 below, the initial resistance values indicate the relative values based on the value of Comparative Example 2-1 regarded as 100. "E3" indicates the discharge capacity retention rates after the cycle characteristic test at 25°C (the relative values based on the value of Comparative Example 2-1 regarded as 100), and "E4" indicates the resistance values after the cycle characteristic test at 25°C (the relative values based on the value of Comparative Example 2-1 regarded as 100).

[Table 5]

Table 5

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-1 | (1-1) 0.5 | - | FEC 5.0<br>VC 2.0 | 100 | 100 | 100 |
| Comparative Example 2-2 | (1-1) 1.0 | - | FEC 5.0<br>VC 2.0 | 104 | 103 | 97 |
| Comparative Example 2-3 | (1-2) 0.5 | - | FEC 5.0<br>VC 2.0 | 107 | 101 | 97 |
| Comparative Example 2-4 | (1-2) 1.0 | - | FEC 5.0<br>VC 2.0 | 115 | 103 | 94 |
| Comparative Example 2-5 | - | - | (1-R) 0.5<br>FEC 5.0<br>VC 2.0 | 107 | 99 | 102 |
| Comparative Example 2-6 | - | - | (1-R) 1.0<br>FEC 5.0<br>VC 2.0 | 120 | 101 | 99 |
| Comparative Example 2-7 | - | (2-1) 1.0 | FEC 5.0<br>VC 2.0 | 98 | 96 | 96 |
| Comparative Example 2-8 | - | (2-2) 1.0 | FEC 5.0<br>VC 2.0 | 102 | 96 | 103 |
| Comparative Example 2-9 | - | (2-3) 1.0 | FEC 5.0<br>VC 2.0 | 97 | 85 | 100 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-10 | (1-1) 1.0 | - | 1,3-PS 1.0<br>FEC 5.0<br>VC 2.0 | 104 | 110 | 100 |
| Comparative Example 2-11 | - | - | (1-R) 1.0<br>1,3-PS 1.0<br>FEC 5.0<br>VC 2.0 | 108 | 97 | 119 |
| Comparative Example 2-12 | - | (2-1) 1.0 | (1-R) 1.0<br>FEC 5.0<br>VC 2.0 | 124 | 91 | 104 |
| Comparative Example 2-13 | - | (2-2) 1.0 | (1-R) 1.0<br>FEC 5.0<br>VC 2.0 | 127 | 90 | 106 |
| Comparative Example 2-14 | - | (2-3) 1.0 | (1-R) 1.0<br>FEC 5.0<br>VC 2.0 | 123 | 84 | 104 |

[Table 6]

Table 6

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Example 2-1 | (1-1) 0.005 | (2-1) 1.0 | FEC 5.0<br>VC 2.0 | 95 | 116 | 90 |
| Example 2-2 | (1-1) 0.015 | (2-1) 1.0 | FEC 5.0<br>VC 2.0 | 90 | 129 | 84 |
| Example 2-3 | (1-1) 0.5 | (2-1) 1.0 | FEC 5.0<br>VC 2.0 | 85 | 141 | 78 |
| Example 2-4 | (1-1) 1.0 | (2-1) 1.0 | FEC 5.0<br>VC 2.0 | 87 | 153 | 71 |
| Example 2-5 | (1-1) 8.0 | (2-1) 1.0 | FEC 5.0<br>VC 2.0 | 91 | 132 | 86 |
| Example 2-6 | (1-1) 10.2 | (2-1) 1.0 | FEC 5.0<br>VC 2.0 | 97 | 118 | 91 |
| Example 2-7 | (1-1) 1.0 | (2-1) 0.005 | FEC 5.0<br>VC 2.0 | 99 | 109 | 94 |
| Example 2-8 | (1-1) 1.0 | (2-1) 0.015 | FEC 5.0<br>VC 2.0 | 96 | 116 | 91 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Example 2-9 | (1-1) 1.0 | (2-1) 0.5 | FEC 5.0<br>VC 2.0 | 91 | 121 | 87 |
| Example 2-10 | (1-1) 1.0 | (2-1) 1.5 | FEC 5.0<br>VC 2.0 | 88 | 127 | 84 |
| Example 2-11 | (1-1) 1.0 | (2-1) 8.0 | FEC 5.0<br>VC 2.0 | 97 | 118 | 90 |
| Example 2-12 | (1-1) 1.0 | (2-1) 11.0 | FEC 5.0<br>VC 2.0 | 99 | 107 | 94 |
| Example 2-13 | (1-1) 0.5 | (2-2) 1.0 | FEC 5.0<br>VC 2.0 | 88 | 138 | 86 |
| Example 2-14 | (1-1) 1.0 | (2-2) 1.0 | FEC 5.0<br>VC 2.0 | 91 | 150 | 78 |
| Example 2-15 | (1-1) 0.5 | (2-3) 1.0 | FEC 5.0<br>VC 2.0 | 81 | 124 | 80 |
| Example 2-16 | (1-1) 1.0 | (2-3) 1.0 | FEC 5.0<br>VC 2.0 | 85 | 136 | 72 |
| Example 2-17 | (1-2) 1.0 | (2-1) 1.0 | FEC 5.0<br>VC 2.0 | 94 | 157 | 64 |
| Example 2-18 | (1-2) 1.0 | (2-2) 1.0 | FEC 5.0<br>VC 2.0 | 98 | 155 | 70 |
| Example 2-19 | (1-2) 1.0 | (2-3)1.0 | FEC 5.0<br>VC 2.0 | 92 | 138 | 65 |

[Table 7]

Table 7

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-1 | (1-1) 0.5 | - | FEC 5.0<br>VC 2.0 | 100 | 100 | 100 |
| Comparative Example 2-2 | (1-1) 1.0 | - | FEC 5.0<br>VC 2.0 | 104 | 103 | 97 |
| Comparative Example 2-3 | (1-2) 0.5 | - | FEC 5.0<br>VC 2.0 | 107 | 101 | 97 |
| Comparative Example 2-4 | (1-2) 1.0 | - | FEC 5.0<br>VC 2.0 | 115 | 103 | 94 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-5 | - | - | (1-R) 0.5<br>FEC 5.0<br>VC 2.0 | 107 | 99 | 102 |
| Comparative Example 2-6 | - | - | (1-R)1.0<br>FEC 5.0<br>VC 2.0 | 120 | 101 | 99 |
| Comparative Example 2-15 | - | (3-1) 0.3 | FEC 5.0<br>VC 2.0 | 107 | 92 | 105 |
| Comparative Example 2-16 | - | (3-2) 0.3 | FEC 5.0<br>VC 2.0 | 113 | 93 | 115 |
| Comparative Example 2-17 | - | (3-3) 0.3 | FEC 5.0<br>VC 2.0 | 107 | 92 | 110 |
| Comparative Example 2-18 | - | - | (3-R) 0.3<br>FEC 5.0<br>VC 2.0 | 106 | 92 | 105 |
| Comparative Example 2-10 | (1-1) 1.0 | - | 1,3-PS 1.0<br>FEC 5.0<br>VC 2.0 | 104 | 110 | 100 |
| Comparative Example 2-11 | - | - | (1-R) 1.0<br>1,3-PS 1.0<br>FEC 5.0<br>VC 2.0 | 108 | 97 | 119 |
| Comparative Example 2-19 | - | (3-1) 0.3 | (1-R) 1.0<br>FEC 5.0<br>VC 2.0 | 122 | 86 | 106 |
| Comparative Example 2-20 | - | (3-2) 0.3 | (1-R) 1.0<br>FEC 5.0<br>VC 2.0 | 132 | 87 | 115 |
| Comparative Example 2-21 | - | (3-3) 0.3 | (1-R) 1.0<br>FEC 5.0<br>VC 2.0 | 123 | 88 | 110 |

[Table 8]

Table 8

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-22 | - | - | (1-R)1.0<br>(3-R) 0.3<br>FEC 5.0<br>VC 2.0 | 120 | 86 | 107 |
| Comparative Example 2-23 | (1-1) 0.5 | - | (3-R) 0.3<br>FEC 5.0<br>VC 2.0 | 116 | 96 | 112 |
| Comparative Example 2-24 | (1-1) 1.0 | - | (3-R) 0.3<br>FEC 5.0<br>VC 2.0 | 110 | 98 | 107 |
| Example 2-20 | (1-1) 0.5 | (3-1) 0.3 | FEC 5.0<br>VC 2.0 | 88 | 130 | 93 |
| Example 2-21 | (1-1) 1.0 | (3-1) 0.3 | FEC 5.0<br>VC 2.0 | 92 | 140 | 84 |
| Example 2-22 | (1-1) 0.5 | (3-2) 0.3 | FEC 5.0<br>VC 2.0 | 96 | 130 | 95 |
| Example 2-23 | (1-1) 1.0 | (3-2) 0.3 | FEC 5.0<br>VC 2.0 | 98 | 140 | 86 |
| Example 2-24 | (1-1) 0.005 | (3-3) 0.3 | FEC 5.0<br>VC 2.0 | 99 | 106 | 105 |
| Example 2-25 | (1-1) 0.015 | (3-3) 0.3 | FEC 5.0<br>VC 2.0 | 96 | 119 | 98 |
| Example 2-26 | (1-1) 0.5 | (3-3) 0.3 | FEC 5.0<br>VC 2.0 | 88 | 132 | 93 |
| Example 2-27 | (1-1) 1.0 | (3-3) 0.3 | FEC 5.0<br>VC 2.0 | 92 | 143 | 84 |
| Example 2-28 | (1-1) 8.0 | (3-3) 0.3 | FEC 5.0<br>VC 2.0 | 95 | 124 | 97 |
| Example 2-29 | (1-1) 10.2 | (3-3) 0.3 | FEC 5.0<br>VC 2.0 | 99 | 110 | 102 |
| Example 2-30 | (1-1) 1.0 | (3-3) 0.005 | FEC 5.0<br>VC 2.0 | 98 | 111 | 94 |
| Example 2-31 | (1-1) 1.0 | (3-3) 0.015 | FEC 5.0<br>VC 2.0 | 95 | 118 | 90 |
| Example 2-32 | (1-1) 1.0 | (3-3) 0.1 | FEC 5.0<br>VC 2.0 | 91 | 127 | 86 |
| Example 2-33 | (1-1) 1.0 | (3-3) 1.0 | FEC 5.0<br>VC 2.0 | 92 | 132 | 88 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Example 2-34 | (1-1) 1.0 | (3-3) 7.0 | FEC 5.0<br>VC 2.0 | 96 | 116 | 92 |
| Example 2-35 | (1-1) 1.0 | (3-3) 11.0 | FEC 5.0<br>VC 2.0 | 99 | 109 | 95 |

[Table 9]

Table 9

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-1 | (1-1) 0.5 | - | FEC 5.0<br>VC 2.0 | 100 | 100 | 100 |
| Comparative Example 2-2 | (1-1) 1.0 | - | FEC 5.0<br>VC 2.0 | 104 | 103 | 97 |
| Comparative Example 2-3 | (1-2) 0.5 | - | FEC 5.0<br>VC 2.0 | 107 | 101 | 97 |
| Comparative Example 2-4 | (1-2) 1.0 | - | FEC 5.0<br>VC 2.0 | 115 | 103 | 94 |
| Comparative Example 2-5 | - | - | (1-R) 0.5<br>FEC 5.0<br>VC 2.0 | 107 | 99 | 102 |
| Comparative Example 2-6 | - | - | (1-R)1.0<br>FEC 5.0<br>VC 2.0 | 120 | 101 | 99 |
| Comparative Example 2-25 | | (4-1) 1.0 | FEC 5.0<br>VC 2.0 | 96 | 94 | 98 |
| Comparative Example 2-10 | (1-1) 1.0 | - | 1,3-PS 1.0<br>FEC 5.0<br>VC 2.0 | 104 | 110 | 100 |
| Comparative Example 2-11 | - | - | (1-R)1.0<br>1,3-PS 1.0<br>FEC 5.0<br>VC 2.0 | 108 | 97 | 119 |
| Comparative Example 2-26 | - | (4-1) 1.0 | (1-R)1.0<br>FEC 5.0<br>VC 2.0 | 123 | 91 | 106 |
| Example 2-36 | (1-1) 0.005 | (4-1) 1.0 | FEC 5.0<br>VC 2.0 | 91 | 107 | 95 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Example 2-37 | (1-1) 0.015 | (4-1) 1.0 | FEC 5.0<br>VC 2.0 | 86 | 122 | 88 |
| Example 2-38 | (1-1) 0.5 | (4-1) 1.0 | FEC 5.0<br>VC 2.0 | 82 | 137 | 82 |
| Example 2-39 | (1-1) 1.0 | (4-1) 1.0 | FEC 5.0<br>VC 2.0 | 85 | 150 | 75 |
| Example 2-40 | (1-1) 8.0 | (4-1) 1.0 | FEC 5.0<br>VC 2.0 | 87 | 127 | 87 |
| Example 2-41 | (1-1) 11.0 | (4-1) 1.0 | FEC 5.0<br>VC 2.0 | 92 | 109 | 94 |
| Example 2-42 | (1-1) 1.0 | (4-1) 0.005 | FEC 5.0<br>VC 2.0 | 99 | 111 | 93 |
| Example 2-43 | (1-1) 1.0 | (4-1) 0.015 | FEC 5.0<br>VC 2.0 | 96 | 119 | 90 |
| Example 2-44 | (1-1) 1.0 | (4-1) 0.5 | FEC 5.0<br>VC 2.0 | 89 | 125 | 87 |
| Example 2-45 | (1-1) 1.0 | (4-1) 1.5 | FEC 5.0<br>VC 2.0 | 87 | 129 | 85 |
| Example 2-46 | (1-1) 1.0 | (4-1) 8.0 | FEC 5.0<br>VC 2.0 | 94 | 118 | 91 |
| Example 2-47 | (1-1) 1.0 | (4-1) 11.0 | FEC 5.0<br>VC 2.0 | 99 | 110 | 95 |

[Table 10]

Table 10

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-1 | (1-1) 0.5 | - | FEC 5.0<br>VC 2.0 | 100 | 100 | 100 |
| Comparative Example 2-2 | (1-1) 1.0 | - | FEC 5.0<br>VC 2.0 | 104 | 103 | 97 |
| Comparative Example 2-3 | (1-2) 0.5 | - | FEC 5.0<br>VC 2.0 | 107 | 101 | 97 |
| Comparative Example 2-4 | (1-2) 1.0 | - | FEC 5.0<br>VC 2.0 | 115 | 103 | 94 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Comparative Example 2-5 | - | - | (1-R) 0.5<br>FEC 5.0<br>VC 2.0 | 107 | 99 | 102 |
| Comparative Example 2-6 | - | - | (1-R) 1.0<br>FEC 5.0<br>VC 2.0 | 120 | 101 | 99 |
| Comparative Example 2-27 | - | (5-1) 1.0 | FEC 5.0<br>VC 2.0 | 102 | 98 | 104 |
| Comparative Example 2-10 | (1-1) 1.0 | - | 1,3-PS 1.0<br>FEC 5.0<br>VC 2.0 | 104 | 110 | 100 |
| Comparative Example 2-11 | - | - | (1-R) 1.0<br>1,3-PS 1.0<br>FEC 5.0<br>VC 2.0 | 108 | 97 | 119 |
| Comparative Example 2-28 | - | (5-1) 1.0 | (1-R) 1.0<br>FEC 5.0<br>VC 2.0 | 109 | 101 | 100 |
| Example 2-48 | (1-1) 0.005 | (5-1) 1.0 | FEC 5.0<br>VC 2.0 | 97 | 110 | 96 |
| Example 2-49 | (1-1) 0.015 | (5-1) 1.0 | FEC 5.0<br>VC 2.0 | 90 | 125 | 89 |
| Example 2-50 | (1-1) 0.5 | (5-1) 1.0 | FEC 5.0<br>VC 2.0 | 82 | 137 | 82 |
| Example 2-51 | (1-1) 1.0 | (5-1) 1.0 | FEC 5.0<br>VC 2.0 | 85 | 150 | 75 |
| Example 2-52 | (1-1) 8.0 | (5-1) 1.0 | FEC 5.0<br>VC 2.0 | 91 | 123 | 90 |
| Example 2-53 | (1-1) 11.0 | (5-1) 1.0 | FEC 5.0<br>VC 2.0 | 98 | 111 | 98 |
| Example 2-54 | (1-1) 1.0 | (5-1) 0.005 | FEC 5.0<br>VC 2.0 | 99 | 107 | 94 |
| Example 2-55 | (1-1) 1.0 | (5-1) 0.015 | FEC 5.0<br>VC 2.0 | 95 | 113 | 90 |
| Example 2-56 | (1-1) 1.0 | (5-1) 0.5 | FEC 5.0<br>VC 2.0 | 93 | 121 | 86 |

(continued)

| | (I) Type and Concentration (% by mass) | (II) Type and Concentration (% by mass) | Other Additive Type and Concentration (% by mass) | Initial Resistance | E3 | E4 |
|---|---|---|---|---|---|---|
| Example 2-57 | (1-1) 1.0 | (5-1) 1.5 | FEC 5.0<br>VC 2.0 | 86 | 130 | 81 |
| Example 2-58 | (1-1) 1.0 | (5-1) 8.0 | FEC 5.0<br>VC 2.0 | 94 | 114 | 90 |
| Example 2-59 | (1-1) 1.0 | (5-1) 11.0 | FEC 5.0<br>VC 2.0 | 98 | 108 | 95 |

From Tables 5 to 10, it can be seen that the nonaqueous electrolyte solution batteries including the nonaqueous electrolyte solutions of the Examples had lower initial resistance than the nonaqueous electrolyte solution batteries including the nonaqueous electrolyte solutions of the corresponding Comparative Examples. In addition, it can be seen that the nonaqueous electrolyte solution batteries including the nonaqueous electrolyte solutions of the Examples had larger E3 and smaller E4 than the nonaqueous electrolyte solution batteries including the nonaqueous electrolyte solutions of the corresponding Comparative Examples.

When the type of (I) is focused, it can be seen from the comparison between Example 2-4 and Example 2-17 in Table 6 that (1-1) had a higher effect of reducing the initial resistance than (1-2).

When the type of the compound (2) is focused, it can be seen that the degree of the effect of reducing the initial resistance was (2-3) > (2-1) > (2-2) from the comparison among Example 2-3, Example 2-13, and Example 2-15, the comparison among Example 2-4, Example 2-14, and Example 2-16, and the comparison among Example 2-17, Example 2-18, and Example 2-19 in Table 6.

INDUSTRIAL APPLICABILITY

According to the present disclosure, a nonaqueous electrolyte solution capable of lowering the initial resistance of a nonaqueous electrolyte solution battery and a nonaqueous electrolyte solution battery having low initial resistance can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-123780) filed on July 28, 2023, the contents of which are incorporated herein by reference.

## Claims

**1.** A nonaqueous electrolyte solution, comprising:

(I) a compound represented by the following general formula (1);
(II) at least one compound selected from the group consisting of the following compounds (2) to (5);
(III) a solute; and
(IV) a nonaqueous organic solvent:

[Chem. 1]

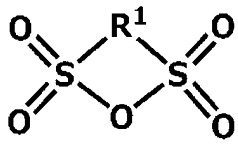

(1)

wherein in the general formula (1), $R^1$ represents an alkylene group having 1 to 6 carbon atoms, an oxygen atom may be included in a carbon atom-carbon atom bond in the alkylene group, and any hydrogen atom of

the alkylene group may be substituted with a halogen atom,
a compound (2): at least one compound selected from the group consisting of a compound represented by the following general formula (2-A), a compound represented by the following general formula (2-B), and a compound represented by the following general formula (2-C),

[Chem. 2]

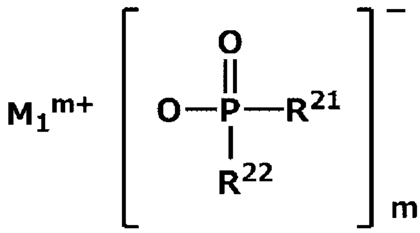

(2-A)

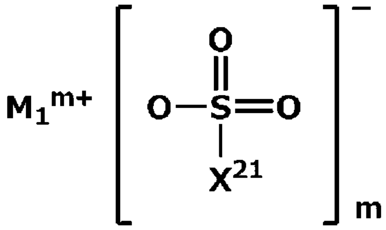

(2-B)

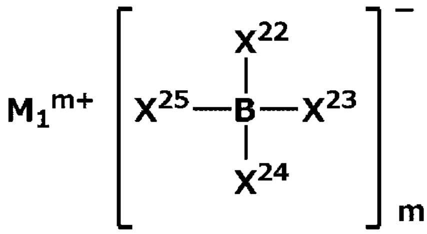

(2-C)

wherein in the general formula (2-A), $R^{21}$ and $R^{22}$ each independently represent a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, any hydrogen atom of the organic group may be substituted with a fluorine atom, and an oxygen atom may be included in a carbon atom-carbon atom bond in the organic group,
$M_1^{m+}$ is a proton, a metal cation, or an onium cation, and m represents a valence of the corresponding cation, wherein the compound represented by the general formula (2-A) contains at least one P-F bond,
in the general formula (2-B), $X^{21}$ represents a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, any hydrogen atom of the organic group may be substituted with a fluorine atom, an oxygen atom may be included in a carbon atom-carbon atom bond in the organic group, and the organic group contains at least one fluorine atom,
$M_1^{m+}$ is a proton, a metal cation, or an onium cation, and
m represents a valence of the corresponding cation,
in the general formula (2-C), $X^{22}$ to $X^{25}$ each independently represent a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon

atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, any hydrogen atom of the organic group may be substituted with a fluorine atom, an oxygen atom may be included in a carbon atom-carbon atom bond in the organic group, and the organic group contains at least one fluorine atom,
$M_1^{m+}$ is a proton, a metal cation, or an onium cation, and
m represents a valence of the corresponding cation,
wherein the compound represented by the general formula (2-C) contains at least one B-F bond,
a compound (3): a compound represented by the following general formula (3),

[Chem. 3]

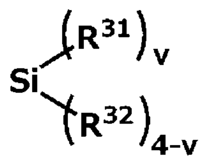

(3)

wherein in the general formula (3), each $R^{31}$ represents a group having a carbon-carbon unsaturated bond, the plurality of $R^{31}$'s may be the same as or different from each other,
each $R^{32}$ represents a fluorine atom or an alkyl group having 1 to 10 carbon atoms, the alkyl group may have at least one of a fluorine atom or an oxygen atom, when there are a plurality of $R^{32}$'s, the plurality of $R^{32}$'s may be the same as or different from each other, and
v represents an integer of 2 to 4,
a compound (4): a compound represented by the following general formula (4),

[Chem. 4]

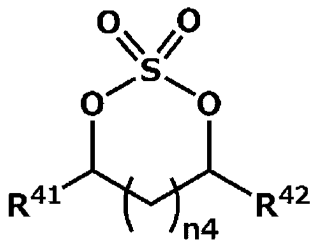

(4)

wherein in the general formula (4), $R^{41}$ and $R^{42}$ each independently represent a hydrogen atom, an alkyl group having 1 or 2 carbon atoms, an alkenyl group having 2 to 5 carbon atoms, or an aryl group having 6 to 10 carbon atoms, any hydrogen atom of the alkenyl group and the aryl group may be substituted with a halogen atom, and
n4 is 0 or 1,
a compound (5): a compound represented by the following general formula (5),

[Chem. 5]

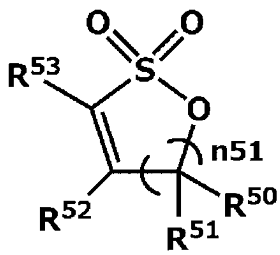

(5)

wherein in the general formula (5), $R^{50}$ to $R^{53}$ each independently represent a hydrogen atom, a fluorine atom, an alkyl group having 1 to 5 carbon atoms, or a fluoroalkyl group having 1 to 4 carbon atoms, and n51 represents an integer of 1 to 3.

2. The nonaqueous electrolyte solution according to claim 1, wherein a content of the (I) with respect to the total amount of the nonaqueous electrolyte solution is 0.01% by mass or more and 10% by mass or less.

3. The nonaqueous electrolyte solution according to claim 1 or 2, wherein a content of the (II) with respect to the total amount of the nonaqueous electrolyte solution is 0.01% by mass or more and 10% by mass or less.

4. The nonaqueous electrolyte solution according to claim 1 or 2, wherein the compound represented by the general formula (1) is at least one compound selected from the group consisting of 1,2-ethanedisulfonic anhydride and 1,3-propanedisulfonic anhydride.

5. The nonaqueous electrolyte solution according to claim 1 or 2, wherein the compound (2) is at least one compound selected from the group consisting of lithium difluorophosphate, lithium fluorosulfonate, lithium trifluoromethanesulfonate, and lithium tetrafluoroborate.

6. The nonaqueous electrolyte solution according to claim 1 or 2, wherein the compound (3) is at least one compound selected from the group consisting of trivinylmethylsilane, trivinylfluorosilane, and tetravinylsilane.

7. The nonaqueous electrolyte solution according to claim 1 or 2, wherein the compound (4) is at least one compound selected from the group consisting of 1,3,2-dioxathiolane-2,2-dioxide and 1,3,2-dioxathiane-2,2-dioxide.

8. The nonaqueous electrolyte solution according to claim 1 or 2, wherein the (III) is: at least one selected from the group consisting of $LiPF_6$, $LiSbF_6$, $LiAsF_6$, $LiClO_4$, $LiN(CF_3SO_2)_2$, $LiN(FSO_2)_2$, $LiN(POF_2)_2$, $LiCF_3SO_3$, $LiC_4F_9SO_3$, $LiAlO_2$, $LiAlCl_4$, LiCl, and LiI; or at least one selected from the group consisting of $NaPF_6$, $NaSbF_6$, $NaAsF_6$, $NaClO_4$, $NaN(CF_3SO_2)_2$, $NaN(FSO_2)_2$, $NaN(POF_2)_2$, $NaCF_3SO_3$, $NaC_4F_9SO_3$, $NaAlO_2$, $NaAlCl_4$, NaCl, and NaI.

9. The nonaqueous electrolyte solution according to claim 1 or 2, wherein the (IV) contains at least one selected from the group consisting of a cyclic ester, a chain ester, a cyclic ether, a chain ether, a sulfone compound, a sulfoxide compound, and an ionic liquid.

10. The nonaqueous electrolyte solution according to claim 9, wherein the cyclic ester is a cyclic carbonate.

11. The nonaqueous electrolyte solution according to claim 10, wherein the cyclic carbonate is at least one selected from the group consisting of ethylene carbonate, propylene carbonate, and fluoroethylene carbonate.

12. The nonaqueous electrolyte solution according to claim 9, wherein the chain ester is a chain carbonate.

13. The nonaqueous electrolyte solution according to claim 12, wherein the chain carbonate is at least one selected from the group consisting of ethyl methyl carbonate, dimethyl carbonate, diethyl carbonate, and methyl propyl carbonate.

14. A nonaqueous electrolyte solution battery, at least comprising:

a positive electrode;
a negative electrode;
a separator; and
the nonaqueous electrolyte solution according to claim 1 or 2.

## INTERNATIONAL SEARCH REPORT

International application No.
**PCT/JP2024/026844**

**A. CLASSIFICATION OF SUBJECT MATTER**

***H01M 10/0567***(2010.01)i; ***H01M 10/052***(2010.01)i; ***H01M 10/054***(2010.01)i; ***H01M 10/0568***(2010.01)i; ***H01M 10/0569***(2010.01)i
FI: H01M10/0567; H01M10/052; H01M10/054; H01M10/0568; H01M10/0569

According to International Patent Classification (IPC) or to both national classification and IPC

**B. FIELDS SEARCHED**

Minimum documentation searched (classification system followed by classification symbols)

H01M10/0567; H01M10/052; H01M10/054; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-165542 A (SONY CORPORATION) 29 July 2010 (2010-07-29) claim 1, experiment examples 1-10, 1-15 | 1-14 |
| X | JP 2016-81603 A (SONY CORPORATION) 16 May 2016 (2016-05-16) experiment example 21 | 1-14 |
| X | CN 106099171 A (DONGUAN KAIXIN BATTERY MATERIAL CO., LTD.) 09 November 2016 (2016-11-09) example 7 | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/026844**

**Box No. III Observations where unity of invention is lacking (Continuation of item 3 of first sheet)**

This International Searching Authority found multiple inventions in this international application, as follows:

Document 1: JP 2010-165542 A (SONY CORPORATION) 29 July 2010 (2010-07-29) claim 1, experiment examples 1-10, 1-15 & US 2010/0178569 A1 claim 1, experiment examples 1-10, 1-15 & EP 2211401 A2& CN 101783412 A
Document 2: JP 2016-81603 A (SONY CORPORATION) 16 May 2016 (2016-05-16) experiment example 21 & WO 2016/056361 A1
Document 3: CN 106099171 A (DONGUAN KAIXIN BATTERY MATERIAL CO., LTD.) 09 November 2016 (2016-11-09) example 7 (Family: none)

Claims are classified into the following six inventions.

(Invention 1) Invention containing a compound represented by general formula (2-A) in claims 1-14
Since documents 1-3 describe a nonaqueous electrolyte solution containing a compound represented by general formula (1) and a compound represented by general formula (2-A), claims 1-3 lack novelty, do not involve an inventive concept in light of documents 1-3, and thus do not have a special technical feature.
The invention containing a compound represented by general formula （2-B）, general formula （2-C）, general formula （3）, general formula （4）, or general formula （5） in claims 1-14 shares, with the invention containing a compound represented by general formula (2-A) in claims 1-14, the common technical feature of a nonaqueous electrolyte solution containing a compound represented by general formula (1). However, the technical features do not make a contribution over the prior art as determined above, and thus cannot be said to be a special technical feature. Additionally, there are no other same or corresponding special technical features between a compound represented by general formula （2-B）, general formula （2-C）, general formula （3）, general formula （4）, or general formula （5）, and a compound represented by general formula (2-A). Furthermore, the invention containing a compound represented by general formula (2-A) in claims 1-14 is not substantially identical to or similarly closely related to any of the other inventions.
Therefore, the invention containing a compound represented by general formula (2-A) in claims 1-14 is classified as invention 1.

Moreover, it should be noted that claims 6-7 specify compounds of "(3)"-"(4)," but the feature in which a compound specified in "(2)" is allowed to be selected in addition to the compounds specified in "(3)"-"(4)" is described according to "(II)" of claim 1 referred to by claims 6-7.

(Invention 2) Invention containing a compound represented by general formula (2-B) in claims 1-14
The invention containing a compound represented by general formula （2-B） in claims 1-14 shares, with the invention classified as invention 1, the common technical feature of a nonaqueous electrolyte solution containing a compound represented by general formula (1). However, the technical features do not make a contribution over the prior art in light of the disclosures of documents 1-3, and thus cannot be said to be a special technical feature. Additionally, there are no other same or corresponding special technical features between the inventions. Additionally, the invention containing a compound represented by general formula (2-B) in claims 1-14 is not substantially identical to or similarly closely related to any of the other inventions.
Therefore, the invention containing a compound represented by general formula (2-B) in claims 1-14 cannot be classified as any of the other inventions.
Moreover, the invention containing a compound represented by general formula (2-B) in claims 1-14 has the special technical feature of a nonaqueous electrolyte solution containing a compound represented by general formula (1) as well as containing a compound represented by general formula (2-B), and is thus classified as invention 2.

The same applies hereinafter, and the invention containing a compound represented by general formula （2-C）, general formula （3）, general formula （4）, or general formula （5） specified in claim 1 is classified as inventions 3-6 as follows.

(Invention 3) Invention containing a compound represented by general formula (2-C) in claims 1-14. (Invention 4) Invention containing a compound represented by general formula (3) in claims 1-14.
(Invention 5) Invention containing a compound represented by general formula (4) in claims 1-14.
(Invention 6) Invention containing a compound represented by general formula (5) in claims 1-14.

## INTERNATIONAL SEARCH REPORT

International application No.
**PCT/JP2024/026844**

**Box No. III Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Invention containing a compound represented by general formula (2-A) in claims 1-14**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2024/026844**

| Patent document cited in search report | Publication date (day/month/year) | Patent family member(s) | Publication date (day/month/year) |
|---|---|---|---|
| JP 2010-165542 A | 29 July 2010 | US 2010/0178569 A1<br>claim 1, experiment examples 1-10, 1-15<br>EP 2211401 A2<br>CN 101783412 A | |
| JP 2016-81603 A | 16 May 2016 | WO 2016/056361 A1 | |
| CN 106099171 A | 09 November 2016 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4379567 B
- JP 3497812 B
- JP 4847675 B
- JP 3439085 B
- JP 5353923 B
- JP 3760540 B
- JP 2023123780 A